# EUROPÄISCHE PATENTANMELDUNG

(11) **EP 3 035 296 A1**
(43) Veröffentlichungstag der Anmeldung: **22.06.2016**
(21) Anmeldenummer: 14075079.5
(22) Anmeldetag: 18.12.2014
(51) Int. Cl.: G07B 15/06, G06Q 30/00, G06Q 10/00

(54) **Verfahren zur Zuordnung eines von einem zentralen Datenverarbeitungssystem erzeugten zentralen Datenverarbeitungsergebnisses zu einer dezentralen Datenverarbeitungseinrichtung, zentrales Datenverarbeitungssystem und dezentrale Datenverarbeitungseinrichtung**

(71) Anmelder: Toll Collect GmbH, 10785 Berlin (DE)
(72) Erfinder: Schild, Klaus, 10965 Berlin (DE); Slizewski, Zbigniew, 10829 Berlin (DE)

(57) **Zusammenfassung**

Es werden ein Verfahren, eine dezentrale Datenverarbeitungseinrichtung und ein zentrales Datenverarbeitungssystem vorgeschlagen, die dazu dienen, die Zuordnung eines von einer zentralen Datenverarbeitungseinrichtung (DVZ) aus einem dezentralen Datensatz (dp) einer dezentralen Datenverarbeitungseinrichtung (DVD) erzeugten zentralen Datenverarbeitungsergebnisses (ze) zu der dezentralen Datenverarbeitungseinrichtung (DVD), von der der dezentrale Datensatz (dp) stammt, vorzunehmen, beziehungsweise ausgebildet sind, eine solche Zuordnung durchzuführen oder zu zumindest zu ihrer Durchführung beizutragen.

Dabei werden in verschiedenen Dätensatzerzeugungsprozessen (D2, Z2) aus dem dezentralen Datensatz (dp) erzeugte Datensatzkennungen (cf1, cf2) des dezentralen Datensatzes (dp) miteinander auf Übereinstimmung verglichen, wobei im Falle der Übereinstimmung der beiden Datensatzkennungen (cf1, cf2) eine datentechnische Zuordnung des zentralen Datenverarbeitungsergebnisses (ze) zu der dezentralen Datenverarbeitungseinrichtung (DVD) erfolgt.

## Beschreibung

Die Erfindung betrifft ein Verfahren, ein zentrales Datenverarbeitungssystem und eine dezentrale Datenverarbeitungseinrichtung nach den Oberbegriffen der unabhängigen Ansprüche.
Im Zuge eines Verfahrens, mit dem datenschutzsensible dezentrale Daten von einer dezentralen Datenverarbeitungseinrichtung, beispielsweise die Positionsdaten eines Mauterhebungsgerätes im Zuge einer möglicherweise mautpflichtigen Fahrt, an ein zentrales Datenverarbeitungssystem gesendet werden, das diese dezentralen Daten zu einem zentralen Datenverarbeitungsergebnis verarbeitet, soll bis zum Vorliegen des Datenverarbeitungsergebnisses zentralseitig keine Zuordnung der dezentralen Daten zu einem Nutzer beziehungsweise der dezentralen Datenverarbeitungseinrichtung möglich sein können. Denn erst nach Vorliegen des zentralen Datenverarbeitungsergebnisses können zentralseitig die dezentralen Daten vernichtet werden. Dazu ist im Stand der Technik und bei der vorliegenden Erfindung vorgesehen, dass die dezentralen Daten anonym von der dezentralen Datenverarbeitungseinrichtung an das dezentrale Datenverarbeitungssystem gesendet werden. Ausgehend vom Vorliegen des zentralen Datenverarbeitungsergebnisses besteht dann das Problem, das zentrale Datenverarbeitungsergebnis derjenigen dezentralen Datenverarbeitungseinrichtung zuzuordnen, von der die dezentralen Daten stammen, aus denen das zentrale Datenverarbeitungsergebnis abgeleitet wurde.

Dazu werden in den Offenlegungsschriften WO 2008 000 227 A1, WO 2009 001 303 A1 und EP 2 320 386 A1 verschiedene Lösungen vorgeschlagen:
Aus der Offenlegungsschrift WO 2008 000 227 A1 ist bekannt, Positionsdaten von einer als fahrzeugseitigen on-board unit (OBU) ausgebildeten dezentralen Einrichtung anonym im Zuge einer ersten Kommunikationsverbindung an eine zentrale Filtereinheit zu senden, und von der OBU die durch die zentrale Filtereinheit aus den Positionsdaten berechneten Mautdaten im Zuge der ununterbrochen aufrecht erhaltenen ersten Kommunikationsverbindung zu empfangen.
Aus der Offenlegungsschrift WO 2009 001 303 A1 ist bekannt, Positionsdaten von einer als OBU ausgebildeten dezentralen Einrichtung unter einer anonymen Kennung an einen ersten Server zu senden, der daraus Mautdaten ermittelt und diese zusammen mit der anonymen Identität einem zweiten Server zur Verfügung stellt, von dem die OBU unter ihrer anonymen Identität diese Mautdaten abrufen kann.
Aus der EP 2 320 386 A1 ist bekannt, Positionsdaten von einer OBU im Zuge einer ersten Kommunikationsverbindung unter einer anonymen Kennung an einen Mautberechnungsserver zur Mautberechnung zu übermitteln und unter Aufrechterhaltung der ersten Kommunikationsverbindung mit der Übermittlung der OBU-Kennung an den Mautberechnungsserver so lange zu warten, bis der Mautberechnungsserver an die OBU eine Mitteilung über die Löschung der Positionsdaten gesendet hat.
Alternativ kann die erste Kommunikationsverbindung beendet werden, wobei die OBU nach Ablauf einer gewissen Zeit, in der die Positionsdaten vom MBS gelöscht sein sollten, ihre Kennung verknüpft mit der anonymen Kennung im Zuge einer zweiten Kommunikationsverbindung überträgt.

Es ist Aufgabe der Erfindung, eine alternative Lösung für die anonyme Bereitstellung von dezentralen Daten einer dezentralen Datenverarbeitungseinrichtung an ein zentrales Datenverarbeitungssystem und die Zuordnung des zentralen Datenverarbeitungsergebnisses zu einer dezentralen Datenverarbeitungseinrichtung vorzuschlagen, die ohne eine anonyme Kennung und ohne den Zwang zur Aufrechterhaltung der ersten Kommunikationsverbindung bis zum Vorliegen des zentralen Datenverarbeitungsergebnisses auskommt.

Diese Aufgabe wird durch ein Verfahren, eine dezentrale Datenverarbeitungseinrichtung und ein zentrales Datenverarbeitungssystem gemäß der unabhängigen Ansprüche gelöst. Vorteilhafte Weiterbildungen sind Gegenstand der abhängigen Ansprüche. Ausführungsformen, Merkmale und Vorteile einer Erfindungskategorie gelten dabei als übertragbar auf alle anderen Erfindungskategorien, soweit das widerspruchsfrei möglich ist.

Zusammengefasst sieht die Erfindung ein Verfahren, eine dezentrale Datenverarbeitungseinrichtung und ein zentrales Datenverarbeitungssystem vor, die dazu dienen, die Zuordnung eines von einer zentralen Datenverarbeitungseinrichtung aus einem dezentralen Datensatz einer dezentralen Datenverarbeitungseinrichtung erzeugten zentralen Datenverarbeitungsergebnisses zu der dezentralen Datenverarbeitungseinrichtung, von der der dezentrale Datensatz stammt, vorzunehmen, beziehungsweise ausgebildet sind, eine solche Zuordnung durchzuführen oder zu zumindest zu ihrer Durchführung beizutragen, wobei in verschiedenen Datensatzerzeugungsprozessen aus dem dezentralen Datensatz erzeugte Datensatzkennungen des dezentralen Datensatzes miteinander auf Übereinstimmung verglichen werden und wobei im Falle der Übereinstimmung der beiden Datensatzkennungen eine datentechnische Zuordnung des zentralen Datenverarbeitungsergebnisses zu der dezentralen Datenverarbeitungseinrichtung erfolgt.
Erfindungsgemäß liegt von den erzeugten Datensatzkennungen eine erste Datensatzkennung in Form eines ersten finalen kryptographischen Datensatzes vor, der aus dem dezentralen Datensatz kryptographisch in wenigstens einem ersten Datensatzerzeugungsprozess erzeugt wurde, und eine zweite Datensatzkennung in Form eines zweiten finalen kryptographischen Datensatzes, der aus dem dezentralen Datensatz kryptographisch in einem zweiten Datensatzerzeugungsprozess erzeugt wurde.

Hinsichtlich seines verfahrenstechnischen Aspekts stellt die Erfindung ein Verfahren zur Zuordnung eines von einer zentralen Datenverarbeitungseinrichtung aus einem dezentralen Datensatz einer dezentralen Datenverarbeitungseinrichtung erzeugten zentralen Datenverarbeitungsergebnisses zu der dezentralen Datenverarbeitungseinrichtung, von der der dezentrale Datensatz stammt bereit, welches die Übertragung des dezentralen Datensatzes von der dezentralen Datenverarbeitungseinrichtung an die zentrale Datenverarbeitungseinrichtung und die Bestimmung wenigstens eines zentralen Datenverarbeitungsergebnisses aus dem dezentralen Datensatz durch die zentrale Datenverarbeitungseinrichtung umfasst und dadurch gekennzeichnet ist, dass in wenigstens einem ersten Datensatzerzeugungsprozess ein erster finaler kryptographischer Datensatz aus dem dezentralen Datensatz erzeugt wird, in wenigstens einem zweiten Datensatzerzeugungsprozess ein zweiter finaler kryptographischer Datensatz aus dem dezentralen Datensatz kryptographisch erzeugt wird, im Zuge eines datentechnischen Vergleichsprozesses der erste finale kryptographischer Datensatz mit dem zweiten finalen kryptographischen Datensatz auf Übereinstimmung verglichen wird, und bei Übereinstimmung des ersten finalen kryptographischen Datensatzes mit dem zweiten finalen kryptographischen Datensatz im Zuge eines datentechnischen Zuordnungsprozesses das zentrale Datenverarbeitungsergebnis der dezentralen Datenverarbeitungseinrichtung zugeordnet wird.

Insbesondere kann das wenigstens eine zentrale Datenverarbeitungsergebnis durch die zentrale Datenverarbeitungseinrichtung aus dem dezentralen Datensatz erzeugt werden, beispielsweise indem die zentrale Datenverarbeitungseinrichtung Daten des dezentralen Datensatzes in vorbestimmter Weise verarbeitet, wozu der dezentrale Datensatz alle Daten umfasst, die für die Erzeugung des zentralen Datenverarbeitungsergebnisses hinreichend sind.
Insbesondere kann der erste finale kryptographische Datensatz aus dem dezentralen Datensatz unter Anwendung wenigstens einer ersten Kryptographie-Funktion kryptographisch erzeugt werden.
Insbesondere kann der zweite finale kryptographische Datensatz aus dem dezentralen Datensatz unter Anwendung wenigstens der ersten Kryptographie-Funktion und/ oder wenigstens einer zweiten Kryptographie-Funktion kryptographisch erzeugt werden.
Von der Formulierung, dass ein erster finaler kryptographischer Datensatz aus dem dezentralen Datensatz kryptographisch erzeugt wird, ist jede Ausführungsform der Erfindung umfasst, mit der der erste finale kryptographische Datensatz nur aus einem oder mehreren Teilen des dezentralen Datensatzes kryptographisch erzeugt wird.
In gleicher Weise gilt: Von der Formulierung, dass ein zweiter finaler kryptographischer Datensatz aus dem dezentralen Datensatz kryptographisch erzeugt wird, ist jede Ausführungsform der Erfindung umfasst, mit der der zweite finale kryptographische Datensatz nur aus einem oder mehreren Teilen des dezentralen Datensatzes kryptographisch erzeugt wird.
Welcher Teil das jeweils ist oder welche Teile das jeweils sind, kann beispielsweise pauschal vorab festgelegt oder individuell durch eine jeweilige Kryptographie-Funktion bestimmt sein.

Darüber hinaus ist von den Formulierungen, dass ein erster finaler kryptographischer Datensatz und ein zweiter finaler kryptographischer Datensatz aus dem dezentralen Datensatz kryptographisch erzeugt werden, jeder Datenzustand des dezentralen Datensatzes umfasst. Der Zustand des dezentralen Datensatzes, der der Erzeugung des ersten finalen kryptographischen Datensatzes und des zweiten finalen kryptographischen Datensatzes unterliegt, kann unverschlüsselt sein - gleichwohl der dezentrale Datensatz verschlüsselt von der dezentralen Datenverarbeitungseinrichtung an die zentrale Datenverarbeitungseinrichtung übertragen werden kann. Der Zustand des dezentralen Datensatzes, der der Erzeugung des ersten finalen kryptographischen Datensatzes und des zweiten finalen kryptographischen Datensatzes unterliegt, kann auch verschlüsselt sein - gleichwohl der dezentrale Datensatz unverschlüsselt von der dezentralen Datenverarbeitungseinrichtung an die zentrale Datenverarbeitungseinrichtung übertragen werden kann.
Der Zustand des dezentralen Datensatzes, der der Erzeugung des ersten finalen kryptographischen Datensatzes und des zweiten finalen kryptographischen Datensatzes unterliegt, kann auch verschlüsselt durch einen zweiten Schlüssel sein-gleichwohl der dezentrale Datensatz verschlüsselt mit einem ersten Schlüssel von der dezentralen Datenverarbeitungseinrichtung an die zentrale Datenverarbeitungseinrichtung übertragen werden kann.

Von der Formulierung, dass ein erster finaler kryptographischer Datensatz aus dem dezentralen Datensatz erzeugt wird, ist auch jede Ausführungsform der Erfindung umfasst, mit der der erste finale kryptographische Datensatz durch die sequentielle Anwendung mehrerer erster Kryptographie-Funktionen erzeugt wird. Bei der sequentiellen Anwendung mehrerer erster Kryptographie-Funktionen wird der erste finale kryptographische Datensatz durch Anwendung einer finalen ersten Kryptographie-Funktion auf ein erstes finales Derivat des dezentralen Datensatzes erzeugt, welches seinerseits durch Anwendung einer oder mehrerer prä-finaler erster Kryptographie-Funktionen auf den dezentralen Datensatz erzeugt wurde. Bei einer solchen schrittweisen Erzeugung des ersten finalen kryptographischen Datensatzes ist der erste Datensatzerzeugungsprozess in mehrere erste Datenverarbeitungsteilprozesse gegliedert, die sequentiell durch ein und dieselbe erste erzeugende Datenverarbeitungseinrichtung oder durch mehrere verschiedene erste erzeugende Datenverarbeitungseinrichtungen durchgeführt werden können, wobei jeweils eine erste erzeugende Datenverarbeitungseinrichtung, die den Folgeschritt durchführt, das erste Derivat des vorangegangenen Schrittes von derjenigen ersten Datenverarbeitungseinrichtung zur Verfügung gestellt bekommt, die im vorangegangen Schritt das besagte erste Derivat erzeugt hat.
In gleicher Weise gilt: Von der Formulierung, dass ein zweiter finaler kryptographischer Datensatz aus dem dezentralen Datensatz erzeugt wird, ist auch jede Ausführungsform der Erfindung umfasst, mit der der zweite finale kryptographische Datensatz durch die sequentielle Anwendung mehrerer erster und/ oder zweiter Kryptographie-Funktionen erzeugt wird. Bei der sequentiellen Anwendung mehrerer erster und/ oder zweiter Kryptographie-Funktionen wird der zweite finale kryptographische Datensatz durch die Anwendung einer finalen ersten oder zweiten Kryptographie-Funktion auf ein finales zweites Derivat des dezentralen Datensatzes erzeugt, welches seinerseits durch Anwendung einer oder mehrerer prä-finaler erster oder zweiter Kryptographie-Funktionen auf den dezentralen Datensatz erzeugt wurde. Bei einer solchen schrittweisen Erzeugung des zweiten finalen kryptographischen Datensatzes ist der zweite Datensatzerzeugungsprozess in mehrere zweite Datenverarbeitungsteilprozesse gegliedert, die sequentiell durch ein und dieselbe zweite Datenverarbeitungseinrichtung oder durch mehrere verschiedene zweite Datenverarbeitungseinrichtungen durchgeführt werden können, wobei jeweils eine zweite Datenverarbeitungseinrichtung, die den Folgeschritt durchführt, das zweite Derivat des vorangegangenen Schrittes von derjenigen zweiten Datenverarbeitungseinrichtung zur Verfügung gestellt bekommt, die im vorangegangen Schritt das besagte zweite Derivat erzeugt hat.

In einem ersten Regelfall wird der erste finale kryptographische Datensatz durch Anwendung einer ersten Kryptographie-Funktion auf den dezentralen Datensatz erzeugt und der zweite finale kryptographische Datensatz durch Anwendung der ersten Kryptographie-Funktion auf den dezentralen Datensatz erzeugt. Das entspricht dem Fall, in dem der zweite finale kryptographische Datensatz durch Anwendung einer zweiten Kryptographie-Funktion auf den dezentralen Datensatz erzeugt wird, die mit der ersten Kryptographie-Funktion identisch ist.
In einem zweiten Regelfall wird der erste finale kryptographische Datensatz durch Anwendung eines ersten Satzes mehrerer erster Kryptographie-Funktionen auf den dezentralen Datensatz erzeugt und der zweite finale kryptographische Datensatz durch Anwendung des ersten Satzes mehrerer erster Kryptographie-Funktionen auf den dezentralen Datensatz erzeugt. Das entspricht dem Fall, in dem der zweite finale kryptographische Datensatz durch Anwendung eines zweiten Satzes mehrerer zweiter Kryptographie-Funktion auf den dezentralen Datensatz erzeugt wird, der mit dem ersten Satz mehrerer erster Kryptographie-Funktion identisch ist.
Die Identität der ersten und der zweiten Kryptographie-Funktionen ist jedoch nicht zwingend. Ebensowenig ist die Identität des ersten Satzes mehrerer erster Kryptographie-Funktionen und des zweiten Satzes mehrerer zweiter Kryptographie-Funktionen zwingend.
Zwingend ist hingegen, dass für jeden ersten dezentralen Datensatz und jeden zweiten dezentralen Datensatz der finale erste kryptographische Datensatz dann mit dem zweiten finalen kryptographischen Datensatz übereinstimmt, wenn ein dem ersten Datensatzerzeugungsprozess unterworfener erster dezentraler Datensatz mit einem zweiten dezentralen Datensatz übereinstimmt, der dem zweiten Datensatzerzeugungsprozess unterworfen wurde.

Diese Forderung kann auch mit der Anwendung einer zweiten Kryptographie-Funktion auf einen dezentralen Datensatz im zweiten Datensatzerzeugungsprozess erfüllt werden, die nicht mit der ersten Kryptographie-Funktion übereinstimmt, die im ersten Datensatzerzeugungsprozess auf den dezentralen Datensatz angewendet wird. Dies ist beispielsweise dann der Fall wenn die erste und die zweite Kryptographie-Funktion jeweils verschiedene, zueinander kommutativ sind, das heißt, dass deren sequentielle Anwendung in verschiedener Reihenfolge als Zwischenergebnisse verschiedene Datensätze liefert, im Endergebnis jedoch den gleichen finalen ersten und zweiten kryptographischen Datensatz.
Diese Argumentation gilt in gleicher Weise für verschiedene erste und zweite Sätze mehrere erster und mehrerer zweiter Kryptographie-Funktionen, die hinsichtlich ihrer Anwendung bezogen auf das Ergebnis kommutativ sind. Zwei Kryptographie-Funktionen F1 und F2 kommutieren dann oder gelten dann in mathematischer Schreibweise F2 = F̅1̅ als kommutativ, wenn für jeden Datensatz d , auf den die erste Kryptographie-Funktion und die zweite Kryptographie angewendet werden, gilt: F1 (F2 (d)) = F2 (F1 (d)).

Mit der Erfindung wird es möglich, einen dezentralen Datensatz, aus dem mittels einer zentralen Datenverarbeitungseinrichtung ein zentrales Datenverarbeitungsergebnis bestimmt werden soll, ohne weitere Daten von der dezentralen Datenverarbeitungseinrichtung an die zentrale Datenverarbeitungseinrichtung zu übertragen, die auf eine Identität der Datenquelle schließen lassen. Erfindungsgemäß brauchen vorteilhaft nur die dezentralen Daten von der dezentralen Datenverarbeitungseinrichtung an die zentrale Datenverarbeitungseinrichtung übertragen werden, die ausschließlich für die Bestimmung des zentralen Datenverarbeitungsergebnisses notwendig sind, nicht jedoch gesonderte Daten, die für eine Zuordnung des zentralen Datenverarbeitungsergebnisses zu der dezentralen Datenverarbeitungseinrichtung benötigt werden.
Im Stand der Technik wird mit den dezentralen Daten verknüpft stets ein weiteres Datenelement von der von der dezentralen Datenverarbeitungseinrichtung an die zentrale Datenverarbeitungseinrichtung übertragen. Dieses weitere Datenelement ist entweder eine temporäre Kennung der dezentralen Datenverarbeitungseinrichtung (EP 2 320 386 A1) oder eine variable Identität der dezentralen Datenverarbeitungseinrichtung (WO 2009 001 303 A1).

Die Erfindung beruht auf der Annahme, dass der dezentrale Datensatz bereits aufgrund seiner Einmaligkeit von sich aus nur mit der dezentralen Datenverarbeitungseinrichtung in Verbindung gebracht werden kann, von der er stammt. Bezogen auf datenschutzsensible dezentrale Datensätze eines mit einer Positionsbestimmungseinrichtung ausgestatteten Mobilfunkgerätes, die jeweils eine Sequenz mehrerer aufeinander folgender Positionen eines Nutzers umfassen, kann diese Einmaligkeit beispielsweise dadurch gegeben sein, dass wenigstens eine, bevorzugt jede, Position, bestehend aus einer geographischen Längen- und einer geographischen Breitenangabe (Longitude, Latitude) mit einen Zeitwert seiner Erfassung verknüpft ist, denn es können sich zwei Nutzer niemals zur selben Zeit am selben Ort aufhalten. Und selbst wenn im Zuge einer flächigen Positionsbestimmung (ohne Höhenkoordinate) zwei Mobilfunkgeräte in der Fläche dieselbe 2D-Position aufweisen, weil sie übereinander in Richtung normal zu der Fläche angeordnet sind, dann weichen sowohl ihre von ihrer jeweiligen Positionsbestimmungseinrichtung bestimmten Positionen aufgrund von statistischen Fluktuationen voneinander ab, als auch die Zeitpunkte der Positionserfassung, soweit sie nicht synchronisiert wurden.

Prinzipiell könnte daher der dezentrale Datensatz zwar, indem er als eindeutige Kennung verwendet wird, ein zweites Mal - diesmal nach der Bestimmung des zentralen Datenverarbeitungsergebnisses und zusammen mit der Kennung der dezentralen Datenverarbeitungseinrichtung - von der dezentralen Datenverarbeitungseinrichtung an die zentrale Datenverarbeitungseinrichtung übertragen werden. Jedoch soll ja gerade vermieden werden, dass der zentralen Datenverarbeitungseinrichtung die Verbindung der sensiblen und individuell schützenswerten Daten des dezentralen Datensatzes mit der dezentrale Datenverarbeitungseinrichtung bekannt wird, wo es doch an sich genügt, dass der zentralen Datenverarbeitungseinrichtung die Verbindung des zentralen Datenverarbeitungsergebnisses mit der dezentrale Datenverarbeitungseinrichtung bekannt wird.
Vorzugsweise erfolgt die Übertragung des dezentralen Datensatzes von der dezentralen Datenverarbeitungseinrichtung an die zentrale Datenverarbeitungseinrichtung anonym in der Weise, dass (a) vom dezentralen Datensatz, der von der dezentralen Datenverarbeitungseinrichtung an die zentrale Datenverarbeitungseinrichtung übertragen wird, keine Kennung - insbesondere keine temporäre Kennung und keine variable Identität-der dezentralen Datenverarbeitungseinrichtung umfasst ist und (b) der dezentrale Datensatz ohne mit einer solchen Kennung der dezentralen Datenverarbeitungseinrichtung verknüpft zu sein von der zentralen Datenverarbeitungseinrichtung empfangen wird. Ein solche Kennung ist beispielsweise durch eine Seriennummer der dezentralen Datenverarbeitungseinrichtung und/ oder durch eine Mobilfunknummer der dezentralen Datenverarbeitungseinrichtung und/ oder eine Internet-Adresse der dezentralen Datenverarbeitungseinrichtung gegeben. Ob diese Kennung verschlüsselt ist oder nicht, ändert nichts am funktionalen Charakter der Kennung.

Insbesondere wird zu dem dezentralen Datensatz zwei Mal jeweils eine Datensatzkennung in Form eines ersten und zweiten finalen kryptographischen Datensatzes aus seinen eigenen Daten unter Zuhilfenahme wenigstens einer Kryptographie-Funktion in zwei verschiedenen Datensatzerzeugungsprozessen erzeugt.
Vorzugsweise unabhängig voneinander stehen dabei die wenigstens eine erste Kryptographie-Funktion einer ersten Datenverarbeitungseinrichtung zur Verfügung, die den ersten Datensatzerzeugungsprozess ausführt, und die wenigstens eine zweite Kryptographie-Funktion, die der ersten Kryptographie-Funktion entsprechen kann, einer zweiten Datenverarbeitungseinrichtung zur Verfügung, die den zweiten Datensatzerzeugungsprozess ausführt.
Damit werden die individuellen Datensatzkennungen, auf deren Vergleich die datentechnische Zuordnung des zentralen Datenverarbeitungsergebnisses zu der dezentralen Datenverarbeitungseinrichtung beruht, an zwei voneinander unabhängigen Stellen erzeugt. Eine Übertragung der Datensatzkennung erfolgt vorzugsweise zum ersten und einzigen Mal allein zum Zwecke des Vergleichs nachdem das zentrale Datenverarbeitungsergebnis vorliegt und der dezentrale Datensatz zentralseitig datentechnisch von der mit zentralen Datenverarbeitungsergebnis verknüpften Datensatzkennung gelöst wurde, beispielsweise indem er gelöscht wurde.
Damit bietet die Erfindung aus datenschutztechnischer Sicht eine hervorragende Lösung, mit der die Übertragung von die dezentrale Datenverarbeitungseinrichtung identifizierenden Daten solange aufgeschoben werden kann, bis tatsächlich die Zuordnung des zentralen Datenverarbeitungsergebnisses zu der dezentralen Datenverarbeitungseinrichtung infolge des Vergleiches von zwei unabhängig voneinander erzeugten Datensatzkennungen stattfindet. Der Erfolg dieser Lösung liegt nämlich eben darin begründet, dass die zur Zuordnung benötigten Datensatzkennungen erfindungsgemäß in zwei unterschiedlichen, voneinander unabhängigen Datensatzerzeugungsprozessen erzeugt werden.

Insbesondere wird der zweite finale kryptographische Datensatz, der in dem zweiten Datensatzerzeugungsprozess aus dem dezentralen Datensatz unter Anwendung wenigstens einer zweiten Kryptographie-Funktion kryptographisch durch eine Datenverarbeitungseinrichtung erzeugt, die nicht mit derjenigen Datenverarbeitungseinrichtung übereinstimmt, die den ersten finalen kryptographischen Datensatz in dem ersten Datensatzerzeugungsprozess.aus dem dezentralen Datensatz unter Anwendung wenigstens einer ersten Kryptographie-Funktion kryptographisch erzeugt.
Diese Maßgabe ist jedoch nicht zwingend. Im Falle einer schrittweisen Erzeugung der finalen kryptographischen Datensätze über Zwischenprodukte - beispielsweise den bereits erwähnten. Derivaten - genügt es, dass jeweils die Zwischenprodukte auf verschiedenen Datenverarbeitungseinrichtungen erzeugt werden. Diese oder wenigstens eines von ihnen können dann einer gemeinsamen Datenverarbeitungseinrichtung zugeführt werden, die durch Anwendung finaler Kryptographie-Funktionen auf die Zwischenprodukte die Endprodukte (die ersten und zweiten finalen kryptographischen Datensätze) erzeugt. Dieses Verfahren ist vor allem bei verschiedenen Sätzen kommutierender Kryptographie-Funktionen vorteilhaft.
Zusammenfassend lässt sich verallgemeinernd sagen, dass an dem ersten Datensatzerzeugungsprozess wenigstens eine erste Datenverarbeitungseinrichtung beteiligt ist, die von wenigstens einer zweiten Datenverarbeitungseinrichtung unterscheidbar ist, die an dem zweiten Datensatzerzeugungsprozess beteiligt ist.

Insbesondere kann die Übertragung des dezentralen Datensatzes von der dezentralen Datenverarbeitungseinrichtung an die zentrale Datenverarbeitungseinrichtung im Zuge einer ersten Kommunikationsphase erfolgen. Vorzugsweise erfolgt die erste Kommunikationsphase zumindest teilweise drahtlos unter Verwendung einer Funkkommunikation. Vorzugsweise erfolgt die erste Kommunikationsphase zumindest teilweise über ein Mobilfunk-Kommunikationsnetz.
Insbesondere kann in einer zweiten Kommunikationsphase der erste finale kryptographische Datensatz oder ein erstes-insbesondere finales - Derivat des dezentralen Datensatz zu einer den datentechnischen Vergleichsprözess durchführenden Datenverarbeitungseinrichtung, auf der der zweite finale kryptographische Datensatz bereitgestellt ist oder wird, übertragen werden. Vorzugsweise erfolgt die zweite Kommunikationsphase zumindest teilweise drahtlos unter Verwendung einer Funkkommunikation. Vorzugsweise erfolgt die zweite Kommunikationsphase zumindest teilweise über ein Mobilfunk-Kommunikationsnetz.
Die zweite Kommunikationsphase kann der ersten Kommunikationsphase vorangehen oder nachfolgen. Diese Variabilität ist eine besondere vorteilhafte Eigenschaft der Erfindung, die aus den voneinander unabhängigen erfindungsgemäßen ersten und zweiten Datensatzerzeugungsprozessen resultiert.

Insbesondere kann der in dem wenigstens einen ersten Datensatzerzeugungsprozess erzeugte ein erste finale kryptographische Datensatz datentechnisch zumindest zeitweise mit der dezentralen Datenverarbeitungseinrichtung assoziiert sein, beispielsweise indem der erste finale kryptographische Datensatz zumindest zeitweise in einem dezentralen Datenspeicher der dezentralen Datenverarbeitungseinrichtung gespeichert ist und/ oder indem der erste finale kryptographische Datensatz zumindest zeitweise mit einer zumindest zeitweise gültigen Kennung der dezentralen Datenverarbeitungseinrichtung verknüpft ist.
Vorzugsweise erfolgt oder besteht diese erste Assoziierung vor der Durchführung des erfindungsgemäßen datentechnischen Zuordnungsprozesses.
Insbesondere kann der in dem wenigstens einem zweiten Datensatzerzeugungsprozess erzeugte zweite finale kryptographische Datensatz der datentechnisch zumindest zeitweise mit dem zentralen Datenverarbeitungsergebnis assoziiert sein, beispielsweise indem der zweite finale kryptographische Datensatz zumindest zeitweise in einem zentralen Datenspeicher der zentralen Datenverarbeitungseinrichtung abgelegt und/ oder mit dem zentralen Datenverarbeitungsergebnis verknüpft ist.

Vorzugsweise erfolgt oder besteht diese zweite Assoziierung vor der Durchführung des erfindungsgemäßen datentechnischen Zuordnungsprozesses.
Im erfindungsgemäßen datentechnischen Zuordnungsprozess kann damit in einfacher Weise die Zuordnung des zentralen Datenverarbeitungsergebnisses zu der dezentralen Datenverarbeitungseinrichtung durch die Übertragung des zentralen Datenverarbeitungsergebnisses auf die dezentrale Datenverarbeitungseinrichtung und/ oder durch die datentechnische Verknüpfung einer Kennung der dezentralen Datenverarbeitungseinrichtung mit dem zentralen Datenverarbeitungsergebnis erfolgen.

Insbesondere kann der dezentrale Datensatz in der ersten Kommunikationsphase ohne den ersten finalen kryptographischen und ohne den zweiten finalen kryptographischen Datensatz von der dezentralen Datenverarbeitungseinrichtung an die zentrale Datenverarbeitungseinrichtung übertragen werden.
Vorzugsweise wird in keiner Kommunikationsphase der dezentrale Datensatz zusammen mit dem ersten finalen kryptographischen oder dem zweiten finalen kryptographischen Datensatz von der dezentralen Datenverarbeitungseinrichtung an die zentrale Datenverarbeitungseinrichtung übertragen.

Es kann vorgesehen sein, dass der erste finale kryptographische Datensatz durch eine erste erzeugende Datenverarbeitungseinrichtung erzeugt wird, der zweite finale kryptographische Datensatz durch eine zweite erzeugende Datenverarbeitungseinrichtung erzeugt wird, der datentechnische Vergleichsprozess des ersten finalen kryptographischen Datensatzes mit dem zweiten finalen kryptographischen Datensatz von einer vergleichenden Datenverarbeitungseinrichtung durchgeführt wird, und der datentechnische Zuordnungsprozess von einer verknüpfenden Datenverarbeitungseinrichtung durchgeführt wird.
Damit kann für jeden erfindungsgemäßen Prozessschritt eine eigens für diesen Prozessschritt vorgesehene Datenverarbeitungseinrichtung bereitgestellt werden.
Sofern die Erzeugung des ersten finalen kryptographischen Datensatzes und/ oder die Erzeugung des zweiten finalen kryptographischen Datensatzes über Zwischenschritte erfolgen, kann ein jedes Zwischenprodukt - insbesondere ein jedes Derivat-von einer anderen Datenverarbeitungseinrichtung erzeugt werden.
Vorzugsweise wird in keiner Kommunikationsphase der dezentrale Datensatz zusammen mit dem ersten finalen kryptographischen oder dem zweiten finalen kryptographischen Datensatz von der dezentralen Datenverarbeitungseinrichtung an eine der genannten Datenverarbeitungseinrichtungen übertragen.

Ausführungsformen des erfindungsgemäßen Verfahrens sehen vor, dass zur Durchführung eines externen Prozesses in Form von zumindest eines Teilprozesses des ersten Datensatzerzeugungsprozesses, des zweiten Datensatzerzeugungsprozesses, des datentechnischen Vergleichsprozesses und/ oder des datentechnischen Zuordnungsprozesses ein aus dem dezentralen Datensatz erzeugter externer kryptographischer Datensatz von der zentrale Datenverarbeitungseinrichtung an eine andere Datenverarbeitungseinrichtung übermittelt wird, wobei die andere Datenverarbeitungseinrichtung die Durchführung des externen Prozesses nicht vollzieht, wenn dem externen kryptographischen Datensatz nicht eine Erklärung der zentralen Datenverarbeitungseinrichtung beigefügt ist, die eine Löschung des dezentralen Datensatzes bestätigt. Eine solche Erklärung kann in Textform lauten: "Der Absender dieses kryptographischen Datensatzes bestätigt, dass die Daten, aus denen der kryptographische Datensatz erzeugt wurde, gelöscht wurden." Insbesondere erzeugt die zentrale Datenverarbeitungseinrichtung automatisch eine derartige Erklärung, wenn der dezentrale Datensatz durch die zentrale Datenverarbeitungseinrichtung gelöscht wurde und verknüpft diese Erklärung mit dem zur Übermittlung vorgesehenen externen kryptographischen Datensatz, dessen dezentraler Datensatz gelöscht wurde.

Ausführungsformen der Erfindung sehen vor, dass der erste finale kryptographische Datensatz mit einer von der dezentralen Datenverarbeitungseinrichtung vergebenen Kennung des dezentralen Datensatzes verknüpft ist oder die dezentrale Datenverarbeitungseinrichtung eine erste erzeugende Datenverarbeitungseinrichtung bildet, welche den ersten Datensatzerzeugungsprozess durchführt, und/ oder der zweite finale kryptographische Datensatz mit einer von der zentralen Datenverarbeitungseinrichtung vergebenen Kennung des dezentralen Datensatzes verknüpft ist oder die zentrale Datenverarbeitungseinrichtung eine zweite erzeugenden Datenverarbeitungseinrichtung bildet, welche den zweiten Datensatzerzeugungsprozess durchführt.
Es ist möglich, dass die zentrale Datenverarbeitungseinrichtung die zweite Datenverarbeitungseinrichtung und die vergleichende Datenverarbeitungseinrichtung bildet oder umfasst, und/ oder und die dezentrale Datenverarbeitungseinrichtung die erste Datenverarbeitungseinrichtung bildet oder umfasst.

Grundsätzlich kann im erfindungsgemäßen Zuordnungsprozess die Zuordnung des zentralen Datenverarbeitungsergebnisses zu der dezentralen Datenverarbeitungseinrichtung beispielsweise durch die Übertragung des zentralen Datenverarbeitungsergebnisses auf die dezentrale Datenverarbeitungseinrichtung und/ oder durch die datentechnische Verknüpfung einer Kennung der dezentralen Datenverarbeitungseinrichtung mit dem zentralen Datenverarbeitungsergebnis erfolgen.
Welche der beiden Möglichkeiten gewählt wird, hängt von den Rahmenbedingungen und dem Zweck ab, denen die Bestimmung des zentralen Datenverarbeitungsergebnisses unterliegt. Sind die dezentralen Datensätze Sequenzen von Positionsdaten einer von einem mautpflichtigen Fahrzeug mitgeführten dezentralen Datenverarbeitungseinrichtung (on-board unit, OBU) und die zentralen Datenverarbeitungsergebnisse Mäutgebühren, die sich aus den Sequenzen von Positionsdaten ableiten lassen, so kann die zentralseitig ermittelte Mautgebühr zentralseitig mit der Kennung der OBU verknüpft werden, wenn zu dem Fahrzeug zentralseitig Kontodaten vorliegen, die einen Einzug der Mautgebühr möglich machen; oder es kann die zentralseitig ermittelte Mautgebühr an die OBU übertragen werden, wenn auf der OBU ein Guthaben vorliegt, das beispielsweise mittels einer pre-paid-Karte erworben wurde, von welchem die Mautgebühr abgezogen wird, ohne dass die Zentrale über Kontodaten des Fahrzeugnutzers oder-halters verfügen muss.
Sind die dezentralen Datensätze Sequenzen von Positionsdaten einer von einem mautpflichtigen Fahrzeug mitgeführten dezentralen Datenverarbeitungseinrichtung (on-board unit, OBU) und die zentralen Datenverarbeitungsergebnisse befahrene Streckenabschnitte, die sich aus den Sequenzen von Positionsdaten ableiten lassen, so kann eine mit dem abgeleiteten Streckenabschnitt verknüpfte Länge dieses Streckenabschnittes, die eine Basisgröße für die Mautgebührenhöhenberechnung darstellt, von der Zentrale an die OBU übertragen werden, die anschließend die Länge mit einer fahrzeugspezifischen Mautrate (in Einheiten von EUR/ km) multipliziert, um die fahrzeugspezifische Mautgebühr zu erhalten, welche zu einem späteren Zeitpunkt, verknüpft mit einer Kennung der OBU, an die Zentrale übertragen wird, um einen Gebühreneinzug im Wege des post-paid durchzuführen.

Besonders bevorzugt wird der erste finale kryptographische Datensatz unter Anwendung wenigstens einer ersten Kryptographie-Funktion auf den dezentralen Datensatz oder auf ein erstes Derivat des dezentralen Datensatzes erzeugt und der zweite finale kryptographische Datensatz unter Anwendung wenigstens einer zweiten Kryptographie-Funktion auf den dezentralen Datensatz oder auf ein zweites Derivat des dezentralen Datensatzes erzeugt, wobei die wenigstens eine erste Kryptographie-Funktion eine erste Einweg-Kryptographie-Funktion ist und die die wenigstens eine zweite Kryptographie-Funktion eine zweite Einweg-Kryptographie-Funktion ist.
Eine Einweg-Kryptographie-Funktion ist eine Kryptographie-Funktion F, die sich leicht berechnen lässt, deren Umkehrung G = U (F), für die gilt G (F(d)) = d, jedoch nicht oder nur sehr schwer, d. h. mit nicht vertretbarem Aufwand, zu berechnen ist, insbesondere, wenn die Funktion F öffentlich bekannt ist (siehe Definition in "Angewandte Kryptographie" von Wolfgang Ertel, Hanser Verlag, ISBN 978-3-446-41195-1 aus dem Jahre 2007).
Insbesondere können die erste Kryptographie-Funktion und die zweite Kryptographie-Funktion identisch sein. Insbesondere können das erste Derivat und das zweite Derivat identisch sein, und zwar bevorzugt dann, wenn auch die erste Kryptographie-Funktion und die zweite Kryptographie-Funktion identisch sind. Diese Identitäten sind jedoch nicht zwingend. Sie können zum Beispiel dann entfallen, wenn die erste und die zweite Kryptographie-Funktion kommutieren und in konsekutiver Weise auf den dezentralen Datensatz angewendet werden, wobei das erste Derivat unter Anwendung der zweiten Kryptographie-Funktion auf den dezentralen Datensatz oder ein initiales Derivat des dezentralen Datensatzes erzeugt wird und das zweite Derivat unter Anwendung der ersten Kryptographie-Funktion auf den dezentralen Datensatz oder ein initiales Derivat des dezentralen Datensatzes erzeugt wird.
Im Falle der besagten Identitäten gilt bevorzugt, dass der erste finale kryptographische Datensatz unter Anwendung wenigstens einer ersten Kryptographie-Funktion auf den dezentralen Datensatz oder auf ein Derivat des dezentralen Datensatzes erzeugt wird und der zweite finale kryptographische Datensatz unter Anwendung wenigstens der ersten Kryptographie-Funktion auf den dezentralen Datensatz oder auf das Derivat des dezentralen Datensatzes erzeugt wird, wobei die wenigstens eine erste Kryptographie-Funktion eine Einweg-Kryptographie-Funktion ist.
Ein Beispiel für eine Einweg-Kryptographie-Funktion ist ein öffentlicher Schlüssel, der mit dem RSA-Algorithmus erzeugt wurde (siehe US-Patenschrift US 4,405,829 A).
Ohne das Erfordernis der besagten Identitäten ist bevorzugt die wenigstens eine erste Kryptographie-Funktion eine erste Hash-Funktion, mit der ein erster Hashwert des dezentralen Datensatzes oder des ersten Derivates des dezentralen Datensatzes erzeugt wird, und die wenigstens eine zweite Kryptographie-Funktion eine zweite Hash-Funktion, mit der ein zweiter Hashwert des dezentralen Datensatzes oder des zweiten Derivates des dezentralen Datensatzes erzeugt wird. Eine Hash-Funktion ist eine Einweg-Kryptographie-Funktion, die beliebig lange Datensätze auf einen Hash-Wert fester Länge abbildet (siehe Definition in "Angewandte Kryptographie" von Wolfgang Ertel, Hanser Verlag, ISBN 978-3-446-41195-1 aus dem Jahre 2007).
Insbesondere kann der erste Hashwert dem ersten kryptographischen Datensatz oder einem ersten Vorläufer (Edukt) des ersten kryptographischen Datensatzes entsprechen, aus dem der erste kryptographische Datensatz beispielsweise unter Anwendung einer weiteren datentechnischen Operation erzeugt wird.
Insbesondere kann der zweite Hashwert dem zweiten kryptographischen Datensatz oder einem zweiten Vorläufer (Edukt) des zweiten kryptographischen Datensatzes entsprechen, aus dem der zweite kryptographische Datensatz beispielsweise unter Anwendung einer weiteren datentechnischen Operation erzeugt wird.
Im Falle der besagten Identitäten von erster und zweiter Kryptographie-Funktion sowie von erstem und zweiten Derivat gilt bevorzugt, dass der erste finale kryptographische Datensatz unter Anwendung wenigstens einer ersten Kryptographie-Funktion auf den dezentralen Datensatz oder auf ein Derivat des dezentralen Datensatzes erzeugt wird und der zweite finale kryptographische Datensatz unter Anwendung wenigstens der ersten Kryptographie-Funktion auf den dezentralen Datensatz oder auf das Derivat des dezentralen Datensatzes erzeugt wird, wobei die wenigstens eine erste Kryptographie-Funktion eine Hash-Funktion ist, mit der ein Hashwert des dezentralen Datensatzes oder des Derivates des dezentralen Datensatzes erzeugt wird.
Insbesondere kann der Hashwert dem ersten und dem zweiten kryptographischen Datensatz entsprechen oder einem Vorläufer (Edukt) des ersten und zweiten kryptographischen Datensatzes entsprechen, aus dem der erste und der zweite kryptographische Datensatz beispielsweise unter Anwendung einer weiteren datentechnischen Operation erzeugt werden. Die Verwendung einer Einweg-Kryptographie-Funktion hat den Vorteil, dass weder aus dem erzeugten ersten kryptographischen Datensatz noch aus dem zweiten kryptographischen Datensatz der dezentrale Datensatz (innerhalb einer vertretbaren Dauer) zurückgewonnen werden kann. Vorteilhaft haben der erste kryptographische Datensatz und der zweite kryptographische Datensatz die Einmaligkeit des dezentralen Datensatzes geerbt und können daher zum Vergleich und nachfolgenden Zuordnung ohne datenschutzrechtliche Bedenken verwendet werden, wenn sie datentechnisch nicht mehr mit dem dezentralen Datensatz verknüpft sind.
Zusätzlich bietet die Verwendung einer Hash-Funktion den Vorteil, dass der Hashwert von relativ kurzer vorgegebener Länge (standardmäßig 128 bit oder 160 bit) ist, was den datentechnischen Vergleichsprozess enorm erleichtert, wobei dennoch der Hashwert die Einmaligkeit des dezentralen Datensatz zu einem sehr hohen Grad geerbt hat, so dass eine zufällige Übereinstimmung zweier Hashwerte von verschiedenen dezentralen Datensätzen praktisch ausgeschlossen ist, wenn der dezentrale Datensatz und der Hashwert lang genug sind.
Vorzugsweise hat der Hashwert oder haben der erste Hashwert und der zweite Hashwert eine Länge von mindestens 128 bit und der dezentrale Datensatz eine Länge von mindestens dem Zehnfachen der Länge des durch die Hash-Funktion erzeugten Hashwertes oder der durch die erste Hash-Funktion und die zweite Hash-Funktion erzeugten ersten und zweiten Hashwerte.

Es kann vorgesehen sein, dass der besagte datentechnische Zuordnungsprozess von einer verknüpfenden Datenverarbeitungseinrichtung durchgeführt wird, auf der zumindest zum Zeitpunkt der Durchführung der Zuordnung des zentralen Datenverarbeitungsergebnisses zu der dezentralen Datenverarbeitungseinrichtung keine Verknüpfung des zentralen Datenverarbeitungsergebnisses mit dem dezentralen Datensatz auf der verknüpfenden Datenverarbeitungseinrichtung vorliegt und/ oder der besagte datentechnische Vergleichsprozess von einer vergleichenden Datenverarbeitungseinrichtung durchgeführt wird, auf der zumindest zum Zeitpunkt der Durchführung des Vergleichs des ersten finalen kryptographischen Datensatzes mit dem zweiten finalen kryptographischen Datensatz keine Verknüpfung des zentralen Datenverarbeitungsergebnisses mit dem dezentralen Datensatz in der vergleichenden Datenverarbeitungseinrichtung vorliegt.
Mit wenigstens einer dieser Maßnahmen wird dem Datenschutzbedürfnis, dass eine Verknüpfung zwischen dem dezentralen Datensatz und der Identität der dezentralen Datenverarbeitungseinrichtung außerhalb der dezentralen Datenverarbeitungseinrichtung vermieden wird, in vorteilhafter Weise Rechnung getragen. Erfindungsgemäß genügt es nämlich, eine Verknüpfung zwischen dem zentralen Datenverarbeitungsergebnis und der dezentralen Datenverarbeitungseinrichtung herzustellen.
Zur Erfüllung der Vorgabe, dass keine Verknüpfung des zentralen Datenverarbeitungsergebnisses mit dem dezentralen Datensatz auf der vergleichenden und/ oder verknüpfenden Datenverarbeitungseinrichtung vorliegt (von denen jede im übrigen auch durch die zentrale Datenverarbeitungseinrichtung bereitgestellte sein kann), kann beispielsweise nach Bestimmung des zentralen Datenverarbeitungsergebnisses durch die zentrale Datenverarbeitungseinrichtung, nach Erzeugung des zweiten finalen kryptographischen Datensatzes in dem zweiten Datensatzerzeugungsprozess durch die zentrale Datenverarbeitungseinrichtung oder durch eine zweite erzeugende Datenverarbeitungseinrichtung und nach der Verknüpfung des zentralen Datenverarbeitungsergebnisses mit dem zweiten finalen kryptographischen Datensatz der auf der zentralen Datenverarbeitungseinrichtung vorliegende dezentrale Datensatz aus der Verknüpfung mit dem zweiten finalen kryptographischen Datensatz, der aus dem dezentralen Datensatz erzeugt wurde, gelöst werden, indem der dezentrale Datensatz von der zentralen Datenverarbeitungseinrichtung gelöscht wird und/ oder das Datensatzpaar aus zentralem Datenverarbeitungsergebnis und zweitem finalen kryptographischen Datensatz ohne den dezentralen Datensatz von der zentralen Datenverarbeitungseinrichtung an die vergleichende und/ oder die verknüpfende Datenverarbeitungseinrichtung übermittelt wird.

Werden der erste finale kryptographische Datensatz durch die konsekutive Anwendung mehrerer erster Kryptographie-Funktionen eines ersten Satzes mehrerer erster Kryptographie-Funktionen auf den dezentralen Datensatz erzeugt und der zweite finale kryptographische Datensatz durch die konsekutive Anwendung mehrerer zweiter Kryptographie-Funktionen eines zweiten Satzes mehrerer zweiter Kryptographie-Funktionen, der mit dem ersten Satz identisch sein kann, auf den dezentralen Datensatz erzeugt, sie bietet sich mit einer Weiterbildung der Erfindung eine besonders effektive Möglichkeit die zentralseitige Verknüpfung des dezentralen Datensatzes mit der dezentralen Datenverarbeitungseinrichtung zu vermeiden.
Diese Weiterbildung sieht vor, dass die Erzeugung des wenigstens einen zweiten finalen kryptographischen Datensatzes im zweiten Datensatzerzeugungsprozess die konsekutive Anwendung wenigstens einer primären Kryptographie-Funktion und einer sekundären Kryptographie-Funktion auf den dezentralen Datensatzes oder auf ein zweites initiales Derivat des dezentralen Datensatzes umfasst, wobei ein primäres Derivat in Form eines kryptographischen Zwischenergebnisses durch Anwendung wenigstens der primären Kryptographie-Funktion auf den dezentralen Datensatz oder auf ein zweites initiales Derivat des dezentralen Datensatzes erzeugt wird, und die zentrale Datenverarbeitungseinrichtung oder ein die zentrale Datenverarbeitungseinrichtung umfassendes zentrales Datenverarbeitungssystem den empfangenen dezentralen Datensatz aus einer bestehenden datentechnischen Verknüpfung mit dem primären Derivat und/ oder dem zentralen Datenverarbeitungsergebnis löst, nachdem die zentrale Datenverarbeitungseinrichtung oder das zentrale Datenverarbeitungssystem das primäre Derivat des empfangenen dezentralen Datensatzes erzeugt oder erhalten hat und bevor die zentrale Datenverarbeitungseinrichtung oder das zentrale Datenverarbeitungssystem den zweiten finalen kryptographischen Datensatz erhalten oder unter Anwendung der sekundären Kryptographie-Funktion auf das primäre Derivat erzeugt hat.
Insbesondere kann in diesem Zusammenhang vorgesehen sein, dass die Erzeugung des wenigstens einen ersten finalen kryptographischen Datensatzes im ersten Datensatzerzeugungsprozess die konsekutive Anwendung wenigstens der primären Kryptographie-Funktion und der sekundären Kryptographie-Funktion auf den dezentralen Datensatzes umfasst, wobei ein primäres Derivat in Form eines kryptographischen Zwischenergebnisses durch Anwendung wenigstens der primären Kryptographie-Funktion auf den dezentralen Datensatz oder auf ein initiales Derivat des dezentralen Datensatzes erzeugt wird.
Im Falle verschiedener erster und zweiter Sätze von kommutierenden primären und sekundären Kryptographie-Funktionen zur Anwendung auf den dezentralen Datensatz ist die Reihenfolge der Anwendung der primären und sekundären Kryptographie-Funktion in dem ersten und zweiten Datenerzeugungsprozess vertauscht.

Ausführungsformen des erfindungsgemäßen Verfahrens sehen vor, dass der erste finale kryptographische Datensatz unter Anwendung wenigstens einer ersten Kryptographie-Funktion auf den dezentralen Datensatz erzeugt wird und der zweite finale kryptographische Datensatz unter Anwendung wenigstens der ersten Kryptographie-Funktion auf den dezentralen Datensatz erzeugt wird, eine kryptographische Datenverarbeitungseinrichtung wenigstens die erste Kryptographie-Funktion erstellt und wenigstens die erste Kryptographie-Funktion an wenigstens eine erste erzeugende Datenverarbeitungseinrichtung zur Durchführung des ersten Datensatzerzeugungsprozesses übermittelt wird. Insbesondere die gehört die dezentrale Datenverarbeitungseinrichtung zu einer Vielzahl von hinsichtlich ihrer jeweiligen Kennung unterscheidbaren dezentralen Datenverarbeitungseinrichtungen und wird wenigstens die erste Kryptographie-Funktion an die Vielzahl von dezentralen Datenverarbeitungseinrichtungen zur Durchführung des ersten Datensatzerzeugungsprozesses verteilt.
Dabei kann die erste Kryptographie-Funktion von der kryptographischen Datenverarbeitungseinrichtung auch an eine zweite erzeugende Datenverarbeitungseinrichtung zur Durchführung des zweiten Datensatzerzeugungsprozesses übermittelt werden.
Insbesondere kann die erste Kryptographie-Funktion mit einem Gültigkeitszeitraum versehen sein, innerhalb dessen die erste Kryptographie-Funktion von der ersten erzeugenden Datenverarbeitungseinrichtung oder von der Vielzahl von dezentralen Datenverarbeitungseinrichtungen zur Durchführung des ersten Datensatzerzeugungsprozesses sowie von der zweiten erzeugenden Datenverarbeitungseinrichtung zur Durchführung des zweiten Datensatzerzeugungsprozesses verwendet wird oder zu verwenden ist.

Ausführungsformen des erfindungsgemäßen Verfahrens sehen vor, dass der erste finale kryptographische Datensatz unter Anwendung wenigstens eines Satzes von mehreren konsekutiv auf den dezentralen Datensatz anzuwendenden Kryptographie-Funktionen erzeugt wird und der zweite finale kryptographische Datensatz unter Anwendung des wenigstens einen Satzes von mehreren konsekutiv auf den dezentralen Datensatz anzuwendenden Kryptographie-Funktionen erzeugt wird, wobei eine kryptographische Datenverarbeitungseinrichtung den wenigstens einen Satz von mehreren konsekutiv anzuwendenden Kryptographie-Funktionen mit einer primären Kryptographie-Funktion und wenigstens einer, ergänzend zur primären Kryptographie-Funktion anzuwendenden, sekundären Kryptographie-Funktion erstellt und von diesem Satz von mehreren konsekutiv anzuwendenden Kryptographie-Funktionen an die zentrale Datenverarbeitungseinrichtung die primäre Kryptographie-Funktion übermittelt und die sekundäre Kryptographie-Funktion einer ersten anderen Datenverarbeitungseinrichtung bereitstellt, die nicht die zentrale Datenverarbeitungseinrichtung ist, die zentrale Datenverarbeitungseinrichtung unter Anwendung der primären Kryptographie-Funktion auf den dezentralen Datensatz oder ein initiales Derivat des dezentralen Datensatzes ein primäres Derivat in Form eines kryptographischen Zwischenergebnisses erzeugt und dieses primäre Derivat an die erste andere Datenverarbeitungseinrichtung übermittelt und die andere Datenverarbeitungseinrichtung im zweiten Dätensatzerzeugungsprozess unter Anwendung der sekundären Kryptographie-Funktion auf das primäre Derivat den finalen kryptographische Datensatz erzeugt.
Vorteilhaft wird eine mögliche Zuordnung des dezentralen Datensatzes mit der dezentralen Datenverarbeitungseinrichtung außerhalb der dezentralen Datenverarbeitungseinrichtung dadurch vermieden, dass der zweite Datensatzerzeugungsprozess auf mehrere verschiedene Datenverarbeitungseinrichtungen, nämlich die zentrale Datenverarbeitungseinrichtung und die erste andere Datenverarbeitungseinrichtung, verteilt wird, wobei die zentrale Datenverarbeitungseinrichtung einen ersten Teil des zweiten Datensatzerzeugungsprozesses durchführt und die erste andere Datenverarbeitungseinrichtung einen zweiten Teil des Datensatzerzeugungsprozesses.

Bei der ersten anderen Datenverarbeitungseinrichtung kann es sich um eine zweite erzeugende Datenverarbeitungseinrichtung handeln, der nur der Durchführung des zweiten Teils des zweiten Datensatzerzeugungsprozesses obliegt; es kann sich aber auch um eine vergleichende Datenverarbeitungseinrichtung handeln, die zusätzlich zur Durchführung des zweiten Teils des zweiten Datenerzeugungsprozesses den datentechnischen Vergleichsprozess durchführt; schließlich kann es sich bei der ersten anderen Datenverarbeitungseinrichtung auch um die kryptographische Datenverarbeitungseinrichtung selbst handeln. Vorzugsweise übermittelt die kryptographische Datenverarbeitungseinrichtung den wenigstens einen Satz von mehreren konsekutiv anzuwendenden Kryptographie-Funktionen an die dezentrale Datenverarbeitungseinrichtung, die im ersten Datensatzerzeugungsprozess den wenigstens einen Satz von mehreren konsekutiv anzuwendenden Kryptographie-Funktionen auf den dezentralen Datensatz zur Erzeugung des ersten finalen kryptographischen Datensatzes anwendet, und den so erzeugten ersten finalen kryptographischen Datensatz an die andere Datenverarbeitungseinrichtung oder eine vergleichende Datenverarbeitungseinrichtung, die den datentechnischen Vergleichsprozess durchführt, übermittelt. Insbesondere gehört die dezentrale Datenverarbeitungseinrichtung zu einer Vielzahl von hinsichtlich ihrer jeweiligen Kennung unterscheidbaren dezentralen Datenverarbeitungseinrichtungen und wird der wenigstens eine Satz von mehreren konsekutiv anzuwendenden Kryptographie-Funktionen an die Vielzahl von dezentralen Datenverarbeitungseinrichtungen zur Durchführung des ersten Datensatzerzeugungsprozesses verteilt.

Handelt es sich bei dem wenigstens einen Satz von mehreren konsekutiv anzuwendenden Kryptographie-Funktionen um einen Satz von kommutierenden Kryptographie-Funktionen, so übermittelt die kryptographische Datenverarbeitungseinrichtung an die dezentralen Datenverarbeitungseinrichtung vorzugsweise nur die sekundäre Kryptographie-Funktion und stellt die primäre Kryptographie-Funktion einer zweiten anderen Datenverarbeitungseinrichtung bereit, die nicht die dezentrale Datenverarbeitungseinrichtung ist, wobei die dezentralen Datenverarbeitungseinrichtung unter Anwendung der sekundären Kryptographie-Funktion auf den dezentralen Datensatz oder ein initiales Derivat des dezentralen Datensatzes ein erstes primäres Derivat in Form eines kryptographischen Zwischenergebnisses erzeugt und dieses erste primäre Derivat an die zweite andere Datenverarbeitungseinrichtung übermittelt, die im ersten Datensatzerzeugungsprozess unter Anwendung der sekundären Kryptographie-Funktion auf das erste primäre Derivat den ersten finalen kryptographische Datensatz erzeugt, und die zentrale Datenverarbeitungseinrichtung unter Anwendung der primären Kryptographie-Funktion auf den dezentralen Datensatz oder ein initiales Derivat des dezentralen Datensatzes ein zweites primäres Derivat in Form eines kryptographischen Zwischenergebnisses erzeugt und dieses zweite primäre Derivat an die erste andere Datenverarbeitungseinrichtung übermittelt, die im zweiten Datensatzerzeugungsprozess unter Anwendung der sekundären Kryptographie-Funktion auf das zweite primäre Derivat den zweiten finalen kryptographische Datensatz erzeugt.
Mit dieser Ausführungsform des erfindungsgemäßen Verfahrens gelingt es vorteilhaft, im ersten und im zweiten Datensatzerzeugungsprozess kryptographische Zwischenergebnisse zu erzeugen, die nicht identisch sind, obwohl sie aus demselben schützenswerten dezentralen Datensatz erzeugt wurden. Erst durch Verarbeitung der unterschiedlichen Zwischenergebnisse mit Hilfe der jeweils anderen, zur zuerst angewandten Kryptographie-Funktion komplementären, Kryptographie außerhalb der zentralen Datenverarbeitungseinrichtung und außerhalb der dezentralen Datenverarbeitungseinrichtung werden finale kryptographische Datensätze erhältlich, die vergleichbar sind.
Vorteilhaft ist es damit der zentralen Datenverarbeitungseinrichtung nicht möglich, den zweiten finalen kryptographischen Datensatz zu erzeugen, der für den Zuordnungsprozess benötigt wird, wodurch ein mögliche unbefugte Zuordnung des an die zentrale Datenverarbeitungseinrichtung übermittelten dezentralen Datensatzes zu der dezentralen Datenverarbeitungseinrichtung noch weiter erschwert wird.

Vorzugsweise ist die zweite andere Datenverarbeitungseinrichtung die erste andere Datenverarbeitungseinrichtung. Dies ist jedoch nicht zwingend. Beispielsweise kann es sich bei der ersten anderen Datenverarbeitungseinrichtung um eine zweite erzeugende Datenverarbeitungseinrichtung handeln, der nur der Durchführung des zweiten Teils des zweiten Datensatzerzeugungsprozesses obliegt, und bei der zweiten anderen Datenverarbeitungseinrichtung um eine erste erzeugende Datenverarbeitungseinrichtung handeln, der nur der Durchführung des zweiten Teils des ersten Datensatzerzeugungsprozesses obliegt, oder um eine vergleichende Datenverarbeitungseinrichtung die zusätzlich zur Durchführung des zweiten Teils des ersten Datensatzerzeugungsprozesses den datentechnischen Vergleichsprozess durchführt und dazu von der ersten anderen Datenverarbeitungseinrichtung den ersten finalen kryptographischen Datensatz erhält.
Schließlich kann es sich bei der ersten anderen Datenverarbeitungseinrichtung und der zweiten anderen Datenverarbeitungseinrichtung auch um die kryptographische Datenverarbeitungseinrichtung selbst handeln.

Ausführungsformen des erfindungsgemäßen Verfahrens sehen vor, dass die Übertragung des dezentralen Datensatzes von der dezentralen Datenverarbeitungseinrichtung im Zuge einer ersten Kommunikationsphase an die zentrale Datenverarbeitungseinrichtung oder an ein die zentrale Datenverarbeitungseinrichtung umfassendes zentrales Datenverarbeitungssystem über einen Anonymisierungsserver erfolgt, der eine allfällig von der dezentralen Datenverarbeitungseinrichtung zusammen mit dem dezentralen Datensatz empfangene Kennung der dezentralen Datenverarbeitungseinrichtung von dem dezentralen Datensatz löst und den dezentralen Datensatz ohne die Kennung der dezentralen Datenverarbeitungseinrichtung an die zentrale Datenverarbeitungseinrichtung oder an eine andere Datenverarbeitungseinrichtung übermittelt, die zur Weiterleitung des dezentralen Datensatzes an die zentrale Datenverarbeitungseinrichtung bestimmt ist.
Beispielsweise kann die Kennung der dezentralen Datenverarbeitungseinrichtung in Form einer Mobilfunknummer vorliegen. Eine Lösung der Kennung der dezentralen Datenverarbeitungseinrichtung von dem dezentralen Datensatz kann beispielsweise dadurch erfolgen, dass der Anonymisierungsserver die datentechnische Verknüpfung zwischen der Kennung der dezentralen Datenverarbeitungseinrichtung und dem dezentralen Datensatz trennt, und den dezentralen Datensatz verknüpft mit einer anderen Kennung, beispielsweise einer eigenen bestehenden Kennung oder einer temporären Kennung, an die zentrale Datenverarbeitungseinrichtung weiterleitet.
Damit wird dem Datenschutzbedürfnis des Nutzers der dezentralen Datenverarbeitungseinrichtung in der Weise erfolgreich Rechnung getragen, indem die zentrale Datenverarbeitungseinrichtung keine, mit dem dezentralen Datensatz verknüpfte, Information erhält, die einen Aufschluss auf die Herkunft des dezentralen Datensatz gestattet. Ausführungsformen des erfindungsgemäßen Verfahrens sehen vor, dass der erste finale kryptographische Datensatz durch die dezentrale Datenverarbeitungseinrichtung kryptographisch aus dem dezentralen Datensatz erzeugt wird und eine Übertragung des ersten finalen kryptographischen Datensatzes von der dezentralen Datenverarbeitungseinrichtung im Zuge einer zweiten Kommunikationsphase an eine vergleichende Datenverarbeitungseinrichtung, die den datentechnischen Vergleichsprozess durchführt, über einen Anonymisierungsserver erfolgt, der eine allfällig von der dezentralen Datenverarbeitungseinrichtung zusammen mit dem ersten finalen kryptographischen Datensatz empfangene Kennung der dezentralen Datenverarbeitungseinrichtung von dem ersten finalen kryptographischen Datensatz löst und den ersten finalen kryptographischen Datensatz ohne die Kennung der dezentralen Datenverarbeitungseinrichtung an die vergleichende Datenverarbeitungseinrichtung oder an eine andere Datenverarbeitungseinrichtung übermittelt, die zur Weiterleitung des ersten finalen kryptographischen Datensatzes an die vergleichende Datenverarbeitungseinrichtung bestimmt ist.
Damit bleibt der vergleichenden Datenverarbeitungseinrichtung die Kennung der dezentralen Datenverarbeitungseinrichtung verborgen, was aus datenschutzrechtlichen Aspekten vorteilhaft ist. Beispielsweise kann während der Durchführung des Vergleichsprozesses die Verbindung zwischen der vergleichenden Datenverarbeitungseinrichtung und der dezentralen Datenverarbeitungseinrichtung unter Vermittlung des Anonymisierungsservers aufrecht erhalten bleiben, und die Zuordnung nach Ermittlung eines mit dem ersten finalen kryptographischen Datensatz übereinstimmenden zweiten finalen kryptographischen Datensatzes dadurch erfolgen, dass das mit dem zweiten finalen kryptographischen Datensatz verknüpfte zentrale Datenverarbeitungsergebnis von der vergleichenden Datenverarbeitungseinrichtung an den Anonymisierungsserver übertragen wird und der Anonymisierungsserver das zentrale Datenverarbeitungsergebnis an die dezentrale Datenverarbeitungseinrichtung weiterleitet.

Besonders bevorzugt sieht das erfindungsgemäße Verfahren vor, dass die dezentrale Datenverarbeitungseinrichtung den wenigstens einen dezentralen Datensatz im Zuge einer ersten Kommunikationsphase an ein, die zentrale Datenverarbeitungseinrichtung umfassendes oder bildendes, zentrales Datenverarbeitungssystem sendet und das zentrale Datenverarbeitungssystem den dezentralen Datensatz im Zuge der ersten Kommunikationsphase ohne eine Kennung der dezentralen Datenverarbeitungseinrichtung empfängt und die zentrale Datenverarbeitungseinrichtung durch Verarbeitung des dezentralen Datensatzes ein zentrales Datenverarbeitungsergebnis des dezentralen Datensatzes bestimmt, wobei die dezentrale Datenverarbeitungseinrichtung aus dem dezentralen Datensatz unter Anwendung wenigstens einer Kryptographie-Funktion auf den dezentralen Datensatz den wenigstens einen ersten finalen kryptographischen Datensatz erzeugt und den ersten finalen kryptographischen Datensatz im Zuge einer zweiten Kommunikationsphase an das zentrale Datenverarbeitungssystem sendet, und das zentrale Datenverarbeitungssystem aus dem im Zuge der ersten Kommunikationsphase empfangenen dezentralen Datensatz unter Anwendung der wenigstens einen Kryptographie-Funktion auf den empfangenen dezentralen Datensatz den wenigstens einen zweiten finalen kryptographischen Datensatz erzeugt, und wobei das zentrale Datenverarbeitungsergebnis der dezentralen Datenverarbeitungseinrichtung zugeordnet wird, indem eine Kennung der dezentralen Datenverarbeitungseinrichtung im Zuge der zweiten Kommunikationsphase von der dezentralen Datenverarbeitungseinrichtung an das zentrale Datenverarbeitungssystem übertragen wird, und durch das zentrale Datenverarbeitungssystem diese Kennung mit dem zentralen Datenverarbeitungsergebnis desjenigen dezentralen Datensatzes datentechnisch verknüpft wird, dessen erster finaler kryptographischer Datensatz dem zweiten finalen kryptographischen Datensatz entspricht, und/ oder indem das zentrale Datenverarbeitungsergebnis im Zuge der zweiten Kommunikationsphase oder einer weiteren Kommunikationsphase von dem zentralen Datenverarbeitungssystem an diejenige dezentrale Datenverarbeitungseinrichtung übertragen wird, dessen erster finaler kryptographischer Datensatz dem zweiten finalen kryptographischen Datensatz entspricht.
Dabei kann das zentrale Datenverarbeitungssystem durch die zentrale Datenverarbeitungseinrichtung gebildet werden. Damit wird das erfindungsgemäße Verfahren für ein Datenverarbeitungssystem bereitgestellt, das prinzipiell auf die dezentrale Datenverarbeitungseinrichtung und die zentrale Datenverarbeitungseinrichtung beschränkt sein kann.

Davon ausgehend kann die zentrale Datenverarbeitungseinrichtung im zweiten Datensatzerzeugungsprozess den zweiten finalen kryptographischen Datensatz erzeugen und das zentrale Datenverarbeitungssystem eine verknüpfende Datenverarbeitungseinrichtung umfassen, die im Zuge der zweiten Kommunikationsphase den ersten finalen kryptographischen Datensatz verknüpft mit einer Kennung der dezentralen Datenverarbeitungseinrichtung empfängt, im Zuge einer dritten Kommunikationsphase, die ersten Kommunikationsphase zeitlich nachgeordnet ist, das zentrale Datenverarbeitungsergebnis von der zentralen Datenverarbeitungseinrichtung empfängt, und eine Zuordnung des zentralen Datenverarbeitungsergebnisses zu der Kennung der dezentralen Datenverarbeitungseinrichtung über Verwendung vermittels des mit der Kennung verknüpften ersten finalen kryptographischen Datensatz durchführt. Insbesondere ist im Zuge der dritten Kommunikationsphase das zentrale Datenverarbeitungsergebnis verknüpft mit dem zweiten kryptographischen Datensatz oder die verknüpfende Datenverarbeitungseinrichtung empfängt das zentrale Datenverarbeitungsergebnis nachdem sie ersten kryptographischen Datensatz an die zentrale Datenverarbeitungseinrichtung weitergeleitet hat.

Ausführungsformen des erfindungsgemäßen Verfahrens sehen vor, dass die dezentrale Datenverarbeitungseinrichtung eine mobile dezentrale Datenverarbeitungseinrichtung ist, die von einem Nutzer entlang eines Weges mitgeführt wird und Wegemessdaten empfängt und/ oder bestimmt, die wenigstens eine Nutzerposition umfassen, und der dezentrale Datensatz zumindest eine Nutzerposition umfasst, und das zentrale Datenverarbeitungsergebnis wenigstens einen Wert umfasst, der von wenigstens einer Nutzerposition des dezentralen Datensatzes abhängt.
Davon ausgehend ist das erfindungsgemäße Verfahren vorzugsweise dahingehend weitergebildet, dass die zentrale Datenverarbeitungseinrichtung unter Verwendung von wenigstens einer Nutzerposition des dezentralen Datensatzes Daten des dezentralen Datensatzes auf die Erfüllung wenigstens einer Bedingung überprüft, die maßgeblich ist für die Erkennung wenigstens eines vorgegebenen geographischen Objekts, und bei Erfüllung aller Bedingungen von Daten des dezentralen Datensatzes bezüglich eines bestimmten vorgegebenen geographischen Objekts wenigstens das bestimmte vorgegebene geographische Objekt und/ oder wenigstens einen aus diesem bestimmten vorgegebenen geographischen Objekt abgeleiteten Wert als zentrales Datenverarbeitungsergebnis des dezentralen Datensatzes registriert.
Beispielsweise kann eine solche mobile dezentrale Datenverarbeitungseinrichtung von einem Fahrzeug umfasst sein oder durch ein Fahrzeug gebildet sein. Beispielsweise kann eine solche mobile dezentrale Datenverarbeitungseinrichtung eine Positionsbestimmungseinrichtung umfassen oder im Abstand von höchstens 10 Metern kommunikatiönstechnisch an eine solche gekoppelt sein, die Signale von Satelliten eines Globalen Navigationssatelliten-Systems (GNSS) empfängt und aus diesen Signalen die Nutzerposition in Form von geographischen Koordinaten des Ortes der Positionsbestimmungseinrichtung bestimmt. Zusätzlich zu der wenigstens einen Nutzerposition können von den Wegemessdaten wenigstens ein Richtungsmesswert und/ oder ein Geschwindigkeitsmesswert umfasst sein. Vorzugsweise ist von dem dezentralen Datensatz ein Positionsdatensatz von mehreren aufeinander folgenden Nutzerpositionen umfasst, die in Form von Wegemessdaten durch die mobile dezentrale Datenverarbeitungseinrichtung zu verschiedenen Zeitpunkten empfangen und/ oder bestimmt werden. Vorzugsweise ist wenigstens eine oder-besonders bevorzugt - jede Nutzerposition des dezentralen Datensatzes mit einem Zeitwert versehen, der ebenfalls vom dezentralen Datensatz umfasst ist.

Vorzugsweise umfasst der dezentrale Datensatz einen Positionsdatensatz mit Daten von wenigstens vier Nutzerpositionen. (auch kurz als "Positionen") bezeichnet. Vorzugsweise sind dabei die Nutzerpositionen in Stellen wenigstens bis zu einer Millibogensekunde oder wenigstens bis zu einem Zentimeter angegeben.
Beispiele für geographische Objekte sind ortsfeste Positionen, Gebiete oder sogenannte Points of Interest (POIs), die ein Infrastrukturobjekt (Straßenabschnitt, Parkplatz, Hotel, etc.) mit einer ihr zugeordneten Position verknüpfen.
Beispiele für aus einem geographischen Objekt abgeleitete Werte sind Gebührenbeträge (Mautgebühr, Parkplatzgebühr, Übernachtungskosten) oder sonstige mit dem geographischen Objekt verknüpfte Werte, beispielsweise Straßenabschnittslängen, Bezeichnungen, Anzahl freier Parkplätze oder Zimmer).
Dabei ist die Erfindung nicht auf Positionsdaten als dezentrale Daten beschränkt. Vielmehr kann die Erfindung auf jegliche dezentrale Daten (zum Beispiel Untersuchungsdaten eines Patienten, Steuerdaten eines Steuerpflichtigen, Zahlungsdaten eines Käufers) angewendet werden, aus denen sich ein Verarbeitungsergebnis gewinnen lässt (zum Beispiel eine Dosierungsanleitung für den Patienten, eine Steuerforderung an den Steuerpflichtigen, Zahlungsbeleg an den Käufer und/ oder Verkäufer).

Hinsichtlich eines seiner vorrichtungstechnischen Aspekte stellt die Erfindung eine dezentrale Datenverarbeitungseinrichtung bereit, die ausgebildet ist, wenigstens einen dezentralen Datensatz zu erzeugen und im Zuge einer ersten Kommunikationsphase an ein zentrales Datenverarbeitungssystem zu senden, aus dem dezentralen Datensatz durch Anwendung wenigstens einer Kryptographie-Funktion auf wenigstens einen bestimmten Teil oder ein Derivat des dezentralen Datensatzes wenigstens einen dezentralen kryptographischen Datensatz des dezentralen Datensatzes zu erzeugen und den dezentralen kryptographischen Datensatz im Zuge einer zweiten Kommunikationsphase an das zentrale Datenverarbeitungssystem zu senden, sowie eine Kennung der dezentralen Datenverarbeitungseinrichtung im Zuge der zweiten Kommunikationsphase an das zentrale Datenverarbeitungssystem zu übertragen und/ oder ein aus dem dezentralen Datensatz abgeleitetes Datenverarbeitungsergebnis im Zuge der zweiten oder einer dritten Kommunikationsphase von dem zentralen Datenverarbeitungssystem zu empfangen.
Damit wird eine dezentrale Datenverarbeitungseinrichtung bereitgestellt, die zur Durchführung von Teilen des erfindungsgemäßen Verfahrens ausgebildet ist, die nicht durch eine zentrale Datenverarbeitungseinrichtung durchgeführt werden, die von dem zentralen Datenverarbeitungssystem umfasst ist, welches den dezentralen Datensatz von der dezentralen Datenverarbeitungseinrichtung empfängt.

Hinsichtlich eines anderen vorrichtungstechnischen Aspektes stellt die Erfindung ein zentrales Datenverarbeitungssystem bereit, das ausgebildet ist, wenigstens einen dezentralen Datensatz im Zuge einer ersten Kommunikationsphase ohne eine Kennung der dezentralen Datenverarbeitungseinrichtung von einer dezentralen Datenverarbeitungseinrichtung zu empfangen und durch Verarbeitung des dezentralen Datensatzes ein zentrales Datenverarbeitungsergebnis des dezentralen Datensatzes zu bestimmen, aus dem im Zuge der ersten Kommunikationsphase empfangenen dezentralen Datensatz durch Anwendung wenigstens einer Kryptographie-Funktion auf wenigstens einen bestimmten Teil oder ein Derivat des empfangenen dezentralen Datensatzes einen zentralen kryptographischen Datensatz des empfangenen dezentralen Datensatzes zu erzeugen, einen dezentralen kryptographischen Datensatz von der dezentralen Datenverarbeitungseinrichtung im Zuge einer zweiten Kommunikationsphase zu empfangen, sowie eine Kennung der dezentralen Datenverarbeitungseinrichtung im Zuge der zweiten Kommunikationsphase von der dezentralen Datenverarbeitungseinrichtung zu empfangen und diese Kennung mit dem zentralen Datenverarbeitungsergebnis des dezentralen Datensatzes datentechnisch zu verknüpfen, dessen dezentraler kryptographischer Datensatz dem zentralen kryptographischen Datensatz entspricht, und/ oder das zentrale Datenverarbeitungsergebnis im Zuge der zweiten Kommunikationsphase an die dezentrale Datenverarbeitungseinrichtung zu übertragen, dessen dezentraler kryptographischer Datensatz dem zentralen kryptographischen Datensatz entspricht.
Damit wird ein zentrales Datenverarbeitungseinrichtung bereitgestellt, das zur Durchführung von Teilen des erfindungsgemäßen Verfahrens ausgebildet ist, die nicht durch die dezentrale Datenverarbeitungseinrichtung durchgeführt werden, wobei das zentrale Datenverarbeitungssystem eine zentrale Datenverarbeitungseinrichtung umfasst, die den dezentralen Datensatz von der dezentralen Datenverarbeitungseinrichtung empfängt und die Bestimmung des wenigstens einen zentralen Datenverarbeitungsergebnisses aus dem dezentralen Datensatz durchführt.

Hinsichtlich eines weiteren vorrichtungstechnischen Aspektes stellt die Erfindung eine kryptographische Datenverarbeitungseinrichtung bereit, die ausgebildet ist, eine Kryptographie-Funktion oder mehrere Kryptographie-Funktionen bereitzustellen, wenigstens eine bereitgestellte Kryptographie-Funktionen an eine Vielzahl von dezentralen Datenverarbeitungseinrichtungen zu versenden und wenigstens eine bereitgestellte Kryptographie-Funktionen an wenigstens eine zentrale Datenverarbeitungseinrichtung zu versenden, einen ersten kryptographischen Datensatz eines dezentralen Datensatzes von wenigstens einer dezentralen Datenverarbeitungseinrichtung zu empfangen, einen zweiten kryptographischen Datensatz des dezentralen Datensatzes zusammen mit einem zentralen Datenverarbeitungsergebnis des dezentralen Datensatzes von der zentralen Datenverarbeitungseinrichtung zu empfangen, einen durch den ersten kryptographischen Datensatz bereitgestellten oder aus dem ersten kryptographischen Datensatz erzeugten ersten finalen kryptographischen Datensatz mit einem durch dem zweiten finalen kryptographischen Datensatz bereitgestellten oder aus dem zweiten kryptographischen Datensatz erzeugten zweiten finalen kryptographischen Datensatz auf Übereinstimmung zu vergleichen, und bei Übereinstimmung des ersten finalen kryptographischen Datensatzes mit dem zweiten finalen kryptographischen Datensatz das zentrale Datenverarbeitungsergebnis der dezentralen Datenverarbeitungseinrichtung zuzuordnen.
Damit wird eine kryptographische Datenverarbeitungseinrichtung bereitgestellt, die zur Durchführung von Teilen des erfindungsgemäßen Verfahrens ausgebildet ist, die nicht durch die dezentrale Datenverarbeitungseinrichtung und nicht durch die zentrale Datenverarbeitungseinrichtung durchgeführt werden. Eine Zuordnung des an die zentrale Datenverarbeitungseinrichtung übermittelten, schützenswerten dezentralen Datensatzes zu der dezentralen Datenverarbeitungseinrichtung wird damit erschwert.
Die erfindungsgemäße kryptographische Datenverarbeitungseinrichtung kann durch ein Datenverarbeitungsgerät oder mehrere, miteinander datentechnisch kommunizierende Datenverarbeitungsgeräte bereitgestellt werden.

Eine Weiterbildung der erfindungsgemäßen kryptographischen Datenverarbeitungseinrichtung sieht vor, dass die kryptographische Datenverarbeitungseinrichtung ausgebildet ist, wenigstens ein N-tupel (N>1) von wenigstens zwei kommutierenden Kryptographie-Funktionen zu erzeugen, wenigstens eine erste Kryptographie-Funktion des N-tupels an eine Vielzahl von dezentralen Datenverarbeitungseinrichtungen zu übertragen, wenigstens eine zweite Kryptographie-Funktion des N-tupels an wenigstens eine zentrale Datenverarbeitungseinrichtung zu übertragen, ein erstes Derivat eines dezentralen Datensatzes von wenigstens einer dezentralen Datenverarbeitungseinrichtung zu empfangen, ein zweites Derivat des dezentralen Datensatzes zusammen mit einem zentralen Datenverarbeitungsergebnis des dezentralen Datensatzes von der zentralen Datenverarbeitungseinrichtung zu empfangen, einen ersten finalen kryptographischen Datensatz unter Anwendung wenigstens der zweiten Kryptographie-Funktion auf das erste Derivat zu erzeugen, einen zweiten finalen kryptographischen Datensatz unter Anwendung wenigstens der ersten Kryptographie-Funktion auf das zweite Derivat zu erzeugen, den ersten finalen kryptographischen Datensatz mit dem zweiten finalen kryptographischen Datensatz auf Übereinstimmung zu vergleichen, und bei Übereinstimmung des ersten finalen kryptographischen Datensatzes mit dem zweiten finalen kryptographischen Datensatz das zentrale Datenverarbeitungsergebnis der dezentralen Datenverarbeitungseinrichtung zuzuordnen.

Nachfolgend wird die Erfindung anhand von zwei Ausführungsbeispielen näher erläutert. Dazu zeigen
- Fig. 1: eine dezentrale Datenverarbeitungseinrichtung DVD in Form eines Fahrzeuggerätes 10 für alle Varianten der zwei Ausführungsbeispiele
- Fig. 2: ein Ablaufdiagramm für die Verfahrensschritte aller Varianten eines ersten Ausführungsbeispiels
- Fig. 3: eine schematische Darstellung einer ersten Variante eines ersten Ausführungsbeispiels eines zentralen Datenverarbeitungssystems DVS und einer dezentralen Datenverarbeitungseinrichtung DVD zur Durchführung der von Verfahrensschritten aller Varianten des ersten Ausführungsbeispiels,
- Fig. 4: eine schematische Darstellung einer zweiten Variante des ersten Ausführungsbeispiels eines zentralen Datenverarbeitungssystems DVS und einer dezentralen Datenverarbeitungseinrichtung DVD,
- Fig. 5: eine schematische Darstellung einer dritten Variante des ersten Ausführungsbeispiels eines zentralen Datenverarbeitungssystems DVS und einer dezentralen Datenverarbeitungseinrichtung DVD,
- Fig. 6: eine schematische Darstellung einer vierten Variante des ersten Ausführungsbeispiels eines zentralen Datenverarbeitungssystems DVS und einer dezentralen Datenverarbeitungseinrichtung DVD,
- Fig. 7: eine schematische Darstellung einer ersten Variante eines zweiten Ausführungsbeispiels eines zentralen Datenverarbeitungssystems DVS und einer dezentralen Datenverarbeitungseinrichtung DVD und
- Fig. 8: eine schematische Darstellung einer zweiten Variante des zweiten Ausführungsbeispiels eines zentralen Datenverarbeitungssystems DVS und einer dezentralen Datenverarbeitungseinrichtung DVD.
- Fig. 9: eine schematische Darstellung einer dritten Variante des zweiten Ausführungsbeispiels eines zentralen Datenverarbeitungssystems DVS und einer dezentralen Datenverarbeitungseinrichtung DVD.

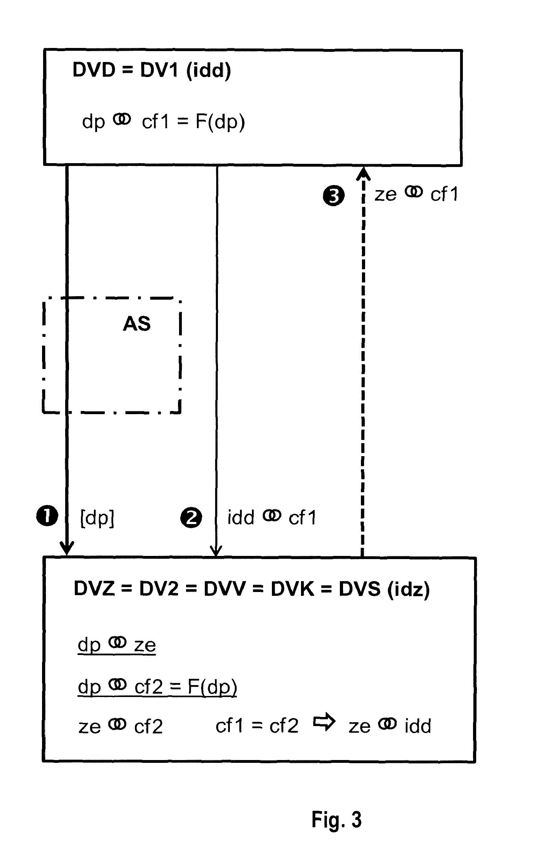

In den Figuren 3 bis 8 geben die Pfeile das Ereignis einer Datenübertragung an, in der die bezeichneten Daten in Pfeilrichtung ausgehend von einer Datenquelle zu einer Datensenke übertragen werden.

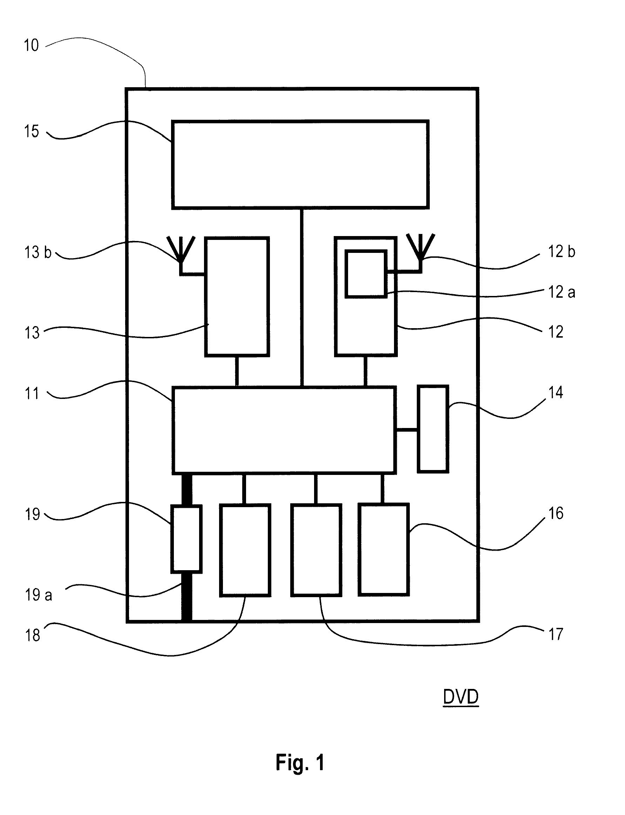

Eine als Fahrzeuggerät 10 ausgebildete, in allen Varianten der nachfolgenden Ausführungsbeispiele umfasste, dezentrale Datenverarbeitungseinrichtung DVD, die von einem Fahrzeug mitgeführt wird, ist schematisch in Fig. 1 dargestellt. Sie weist einen dezentralen Prozessor 11 auf, der kommunikativ gekoppelt ist an eine Positionsbestimmungseinrichtung 12, die einen GNSS-Empfänger 12a mit einer GNSS-Empfangsantenne 12b umfasst, über die Signale von mehreren GNSS-Satelliten empfangen werden, aus welchen die Positionsbestimmungseinrichtung 12 fortlaufend - vorzugsweise im Sekundentakt - die Position des GNSS-Empfängers-zumindest näherungsweise zum Zeitpunkt des Empfangs der GNSS-Satelliten-Signale berechnet. Fakultativ ist die Positionsbestimmungseinrichtung 12 kommunikativ an weitere (nicht dargestellte) Sensoren gekoppelt, beispielsweise einen Geschwindigkeitssensor eines Fahrzeugs (beispielsweise ein Tachometer) und einen Bewegungsrichtungsänderungssensor (beispielsweise ein Gyroskop). Messwerte dieser Sensoren kann die Positionsbestimmungseinrichtung 12 im Verfahren der sogenannten Koppelortung mit den vom GNSS-Empfänger 12a gelieferten GNSS-Positionen zu wenigstens einer Koppelortungs-Position verarbeiten, die genauer ist als die GNSS-Position. Insbesondere im Falle zeitweise z. B. durch Abschattung ausbleibender GNSS-Positionen kann damit trotz weiterer Bewegung über eine begrenzte Strecke/ Zeit eine Position im Zuge des sogenannten "dead reckoning" ermittelt werden. Optional oder alternativ kann auch der dezentrale Prozessor 11 kommunikativ an besagte Sensoren und/ oder andere Sensoren gleichen Typs wie besagte Sensoren gekoppelt sein, und die Koppelortung unter Verwendung der von der Positionsbestimmungseinrichtung 12 bereitgestellten GNSS- und/ oder Koppelortungs-Positionen durchführen oder verbessern. Unabhängig von ihrem Erzeugungsweg werden die von dem dezentralen Prozessor empfangenen oder erzeugten GNSS- und/ oder Koppelortungs-Positionsdaten verallgemeinert als Positionsdaten einer Position bezeichnet. Diese Position gilt als Fahrzeugposition, weil die Positionsbestimmungseinrichtung 12, dessen Position bestimmt wird, von einem Fahrzeug mitgeführt wird. Die Positionsdaten umfassen für jede Position zumindest einen Longitudenwert (Längenkoordinatenwert) und einen Latitudenwert (Breitenkoordinatenwert). Damit ist die Position des GNSS-Empfängers zumindest in der örtlich näherungsweise zwei-dimensionalen Ebene der Erdoberfläche im Rahmen der Genauigkeit des verwendeten Positionsbestimmungsverfahrens vorübergehend zumindest näherungsweise für den Zeitpunkt festgelegt, zu dem die GNSS-Signale empfangen wurden. Dieser Zeitpunkt kann durch das Zeitsignal, das im GNSS-Signal enthalten ist, oder durch das Zeitsignal einer Uhr - beispielsweise einer Funkuhr -, die an den dezentralen Prozessor 11 gekoppelt ist, als Uhrzeit mit Datumsangabe ("Zeitstempel") spezifiziert werden und unter Bildung eines Positionsdatensatzes zu den Positionsdaten als ergänzende Information zu jeder Position hinzugefügt werden.
Ein Positionsdatensatz umfasst wenigstens die Daten einer Position und weitere Daten. Diese weiteren Daten können Zeitdaten des Zeitstempels, Zufallsdaten und/ oder Positionsdaten einer weiteren Position oder mehrerer weiterer Positionen sein.
Zur Durchführung seiner Aufgaben wird auf dem Prozessor 11 ein Computerprogramm ausgeführt, welches zuvor in einem Daten-Lese-Speicher 16 gespeichert wurde und durch das Betriebssystem des dezentralen Prozessors 11 zumindest abschnittsweise in den Arbeitsspeicher 17 (Daten-Schreib-Leser-Speicher) des dezentralen Prozessors 11 geladen wird, um für den dezentralen Prozessor 11 effizient verwendbar zu sein. Durch die Ausführung des Computerprogramms ist der dezentrale Prozessor 11 konfiguriert und mithin die dezentrale Datenverarbeitungseinrichtung DVD eingerichtet, erfindungsgemäße Verfahrensschritte durchzuführen. Der dezentrale Prozessor 11 ist an ein Sicherheitsmodul 18 gekoppelt, das als eigenständige Datenverarbeitungseinheit (beispielsweise eine Chipkarte) ausgebildet ist, die wenigstens ein autonomes Steuermodul und einen Speicherbereich aufweist (beide nicht dargestellt), wobei das autonome Steuermodul bevorzugt dazu konfiguriert ist, Anfragen nach einer Herausgabe von Daten aus dem Speicherbereich und/oder der Änderung oder Aufnahme von Daten im Speicherbereich nur gegen eine Authentifizierung auszuführen. Die Durchführung der Authentifizierungsprozedur kann durch die Analyse einer digitalen Signatur mittels eines vom Signierenden im Sicherheitsmodul abgelegten öffentlichen Schlüssels erfolgen.
Anstelle des Sicherheitsmoduls 18 kann auch ein kryptographischer Datenspeicher 18 vorgesehen sein, in den der Prozessor 11 Daten nur mit entsprechender Authentifizierung verschlüsselt ablegen kann und entschlüsselnd auslesen kann. Der Speicherbereich des Sicherheitsmoduls 18 oder der kryptographische Datenspeicher 18 enthalten wenigstens eine erfindungsgemäße kryptographische Funktion und nehmen wenigstens einen kryptographischen Datensatz auf, der mittels wenigstens einer kryptographischen Funktion durch das autonome Steuermodul oder den dezentralen Prozessor 11 aus einem Positionsdatensatz erzeugt wurde. Auch die verschlüsselte Speicherung des Positionsdatensatzes im Speicherbereich des Sicherheitsmoduls 18 oder im kryptographischen Datenspeicher 18 ist mittels entsprechender Anweisungen, die durch den dezentralen Prozessor 11 ausgeführt werden, möglich.
Eine Anzeigeeinrichtung 15 kann Nachrichten des dezentralen Prozessors 11 in graphischer Form oder Textform wiedergeben. Eine nicht darstellte Eingabeeinrichtung (die auch von der Anzeigeeinrichtung 15 umfasst sein kann) dient zur Aufnahme von Daten und Befehlen eines Nutzers an den dezentralen Prozessor.
Darüber hinaus umfasst das Fahrzeuggerät einen Mobilfunk-Sendeempfänger 13, beispielsweise in Form eines GSM-oder UMTS-Moduls, mit einer Mobilfunk-Antenne 13a. Der Mobilfunk-Sendeempfänger wird durch den dezentralen Prozessor 11 angewiesen, einen Positionsdatensatz (vorzugsweise in verschlüsselter Form) an eine Stelle zu senden, die der Prozessor vorgibt.
Eine wiederaufladbare Batterie 19 versorgt die genannten Komponenten des Fahrzeuggerätes 10 mit elektrischem Strom. Des weiteren ist ein Stromversorgungsanschluss 19a vorgesehen, über den die wiederaufladbare Batterie 19 wieder aufgeladen werden kann und/ oder die genannten Komponenten des Fahrzeuggerätes 10 unabhängig von der wiederaufladbaren Batterie 19 mit elektrischem Strom versorgt werden können.
Optional umfasst das Fahrzeuggerät 10 ein DSRC-Kommunikationseinrichtung (nicht dargestellt) zur DSRC-Kommunikation mit straßenseitigen Kontrolleinrichtungen (DSRC = dedicated short-range communication) und/ oder Schnittstellen (z. B. CAN, USB, bluetooth, W-LAN) zur kurzreichweitigen Kommunikation (ebenfalls nicht dargestellt) mit anderen im Fahrzeug mitgeführten Komponenten (ebenfalls nicht dargestellt), beispielsweise ein Mobiltelefon, eine elektronische Identifizierungskarte, ein Navigationssystem.
Anstelle des Fahrzeuggerätes auch eine Fahrzeugeinrichtung mit über das Fahrzeug verteilten Komponenten des Fahrzeuggerätes vorgesehen sein, die über Kommunikationsschnittstellen zumindest zeitweise wenigstens zur Übertragung von Daten mit zumindest dem dezentralen Prozessor 11 in Verbindung stehen.
Die beiden Werte (Longitudenwert und Latitudenwert) einer Position werden vorzugsweise in ganzzahligen Einheiten von Millibogensekunden vom Fahrzeuggerät gespeichert und verarbeitet, wobei die Rundung vorzugsweise auf die kleinste Dezimalstelle (d. h. die letzte Stelle) beschränkt ist. Eine Differenz von einer Millibogensekunde entspricht in der Latitude einer Differenz von 3 cm, in der Longitude bei einer Latitude von 50° (Deutschland) einer Differenz von 2 cm. Die Genauigkeit der GNSS-Positionsbestimmung liegt derzeit im Vertrauensintervall von 95% bei etwa 3 m; das heißt: die letzten beiden Stellen der Wertangaben in Millibogensekunden unterliegen statistischer Fluktuation.
Die Wahrscheinlichkeit dafür, dass eine Position in allen Millibogensekundenstellen beider Koordinatenwerte von zwei beliebigen, verschiedenen Fahrzeuggeräten übereinstimmt, ist bei einem Fluss von Fahrzeuggeräten, der höchstens der Positionsbestimmungsfrequenz von 1 Hz entspricht, ist bereits nach 2 Minuten größer als 50%. Die Wahrscheinlichkeit dafür, dass das eine Übereinstimmung in zwei Positionen nach einem Tag auftritt, beträgt 40%. Ein akzeptables Risiko für eine Übereinstimmung nach einem Tag ist eine Wahrscheinlichkeit von kleiner als 1 ppm. Dies wird mit 5·10⁻⁹ erst für einen Positionsdatensatz erreicht, der vier Positionen umfasst. Mit zunehmender Fahrzeuggeschwindigkeit sinkt dieser Wahrscheinlichkeitswert. Bei Einhaltung des Mindestabstandes ist eine Fahrzeuggeschwindigkeit von 120 km/h nötig, um bereits für drei Positionen die Übereinstimmungswahrscheinlichkeit von 1 ppm zu unterschreiten. Auf die Einhaltung einer Mindestfahrzeuggeschwindigkeit ist jedoch kein Verlass, weil es auf jeder Straße zu einem Stau kommen kann, so dass der Positionsdatensatz stets die Koordinatenwerte von wenigstens vier Positionen umfassen sollte.
Alternativ kann der Positionsdatensatz nur die Werte einer einzigen Position umfassen, wenn diese um einen Zeitstempel der Erfassung dieser einzigen Position ergänzt werden. Damit wird der Positionsdatensatz einmalig und von den Positionsdatensätzen aller übrigen Fahrzeuge unterscheidbar, weil sich im Rahmen der Positionsgenauigkeit zu selben Zeit keine zwei Fahrzeuge zur selben Zeit am selben Ort aufhalten können. Sie können sich zur selben Zeit nur an verschiedenen Orten aufhalten, die im Rahmen Positionsgenauigkeit unterscheidbar sind, oder zu verschiedenen Zeiten am selben Ort aufhalten.
Auch ohne einen Zeitstempel kann ein Positionsdatensatz, der nur die Werte einer einzigen Position umfasst, zumindest innerhalb eine kurzen Zeitrahmes von einem Tag oder einer Woche eine relativ sichere Einmaligkeit erlangen, die sich durch die Unwahrscheinlichkeit auszeichnet, dass zwei 6- bis 10-stellige Zufallszahl, die in verschiedenen Fahrzeuggeräten 10 jeweils den Positionsdaten zur Bildung des Positionsdatensatzes hinzugefügt werden, übereinstimmen.
Besonders vorteilhaft ist die Kombination von zweien der Alternativen oder von allen dreien (Daten von mindestens vier Positionen, vorzugsweise mehr als einhundert Positionen, jeweils ergänzt um eine mehrstellige Zufallszahl und um einen Zeitstempel) zu einem Positionsdatensatz.
Keine dieser Varianten soll durch eines der folgenden Ausführungsbeispiele ausgeschlossen werden, für die im Folgenden der Begriff Positionsdatensatz mit Positionsdaten von wenigstens vier Positionen stellvertretend für alle genannten möglichen Varianten verwendet wird.

### ERSTES AUSFÜHRUNGSBEISPIEL

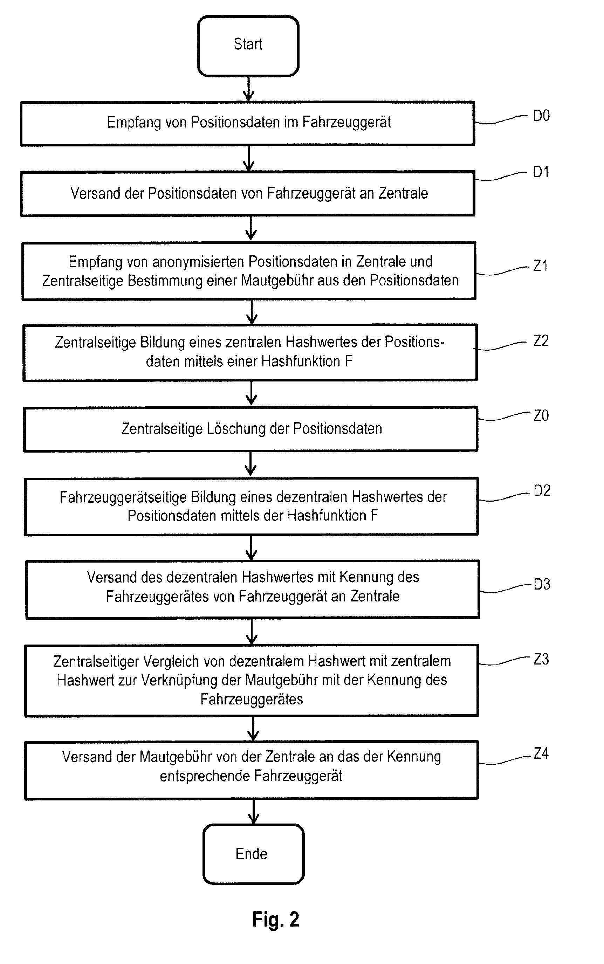

Fig. 2 zeigt ein Ablaufdiagramm für die Verfahrensschritte aller Varianten eines ersten Ausführungsbeispiels, zu dem mit Fig. 3 eine schematische Darstellung einer ersten Variante dieses ersten Ausführungsbeispiels in Form eines Mautsystems mit einer zentralen Datenverarbeitungssystems DVS und einer dezentralen Datenverarbeitungseinrichtung DVD gezeigt wird.
Gemäß Schritt D0 von Fig. 2 werden Positionsdaten mehrerer aufeinander folgender Fahrzeugpositionen im Fahrzeuggerät 10 als dezentraler Datenverarbeitungseinrichtung DVD empfangen, beispielsweise, indem der Prozessor 11 Daten der bestimmten Fahrzeugpositionen von dem GNSS-Empfänger 12 entgegennimmt. Die Positionsdaten werden in der vom GNSS-Empfänger bereitgestellten oder in einer durch den Prozessor verarbeiteten Form zumindest solange vorübergehend im Sicherheitsmodul 18 gespeichert, bis zu einer vorbestimmten Anzahl von 100 Fahrzeugpositionen Positionsdaten im Sicherheitsmodul 18 vorliegen. Alternativ oder optional kann der Prozessor 11 die Positionsdaten auch im Arbeitsspeicher 17 speichern.
Im nächsten Schritt verschlüsselt der Prozessor 11 Positionsdaten von 100 Fahrzeugpositionen umfassenden Positionsdatensatz dp mit dem öffentlichen Schlüssel eines asymmetrischen Schlüsselpaares, zu dem der private Schlüssel in der den Positionsdatensatz empfangenden Datenverarbeitungszentrale DVZ gespeichert ist. Dabei sind vom Positionsdatensatz dp auch Fahrzeugdaten umfasst, die maßgeblich sind für die Höhe der Mautgebühr, die sich aus der Benutzung eines mautpflichtigen Streckenabschnittes ergibt. Diese Fahrzeugdaten klassifizieren das Fahrzeug, aber identifizieren es nicht. Beispiele für Fahrzeugdaten sind zulässiges Gesamtgewicht, Achsenzahl oder Achsklasse und Schadstoffklasse. Anschließend weist der Prozessor 11 den Mobilfunk-Sendeempfänger 13 an, den verschlüsselten Positionsdatensatz [dp] im Rahmen einer ersten Datenübertragung 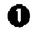 an das zentrale Datenverarbeitungssystem DVS zu senden, das durch die zentrale Datenverarbeitungseinrichtung DVZ gebildet wird (Schritt D1 in Fig. 2). Dabei kann der Prozessor 11 den Mobilfunk-Sendeempfänger 13 anweisen, die Mobilfunk-Nummer der zentralen Datenverarbeitungseinrichtung DVZ anzuwählen, die als Kennung oder zu der Kennung idz der zentralen Datenverarbeitungseinrichtung DVZ im Speicher 16 oder 18 der dezentralen Datenverarbeitungseinrichtung DVD hinterlegt ist. Dabei kann das Mobilfunk-Vermittlungssystem (nicht dargestellt), ausgebildet sein, die Weitergabe der Identität der dezentralen Datenverarbeitungseinrichtung DVD - insbesondere seiner Mobilfunknummer - an die zentrale Datenverarbeitungseinrichtung DVZ zu unterbinden, wodurch der verschlüsselte Positionsdatensatz [dp] anonym bei der zentralen Datenverarbeitungseinrichtung DVZ eintrifft - siehe erster Teilschritt von Z1 in Fig. 2. Es können mehrere verschiedenen Kennungen idz zu verschiedenen zentralen Datenverarbeitungseinrichtungen im Speicher 16 oder 18 der dezentralen Datenverarbeitungseinrichtung DVD hinterlegt sein, wobei der Prozessor 11 konfiguriert ist, anhand wenigstens eines Kriteriums eine bestimmte Kennung idz zur Adressierung des verschlüsselten Positionsdatensatz [dp] auszuwählen.
Wie in Fig. 3 angedeutet, kann der Versand des verschlüsselten Positionsdatensatzes [dp] an die zentrale Datenverarbeitungseinrichtung DVZ auch dadurch anonymisiert werden, indem auf dem Kommunikationsweg zwischen dezentraler Datenverarbeitungseinrichtung DVD und zentraler Datenverarbeitungseinrichtung DVZ ein Anonymisierungsserver AS zwischengeschaltet ist, an den die dezentrale Datenverarbeitungseinrichtung DVD (gegebenenfalls unter Bekanntgabe ihrer Identität) den verschlüsselten Positionsdatensatz [dp] sendet, den der Anonymisierungsserver AS unter Bekanntgabe seiner eigenen Identität, gegebenenfalls ergänzt um eine digitale Signatur seinerseits, ohne Bekanntgabe der Identität der dezentralen Datenverarbeitungseinrichtung DVD an die zentrale Datenverarbeitungseinrichtung DVZ weiterleitet.
In der zentralen Datenverarbeitungseinrichtung DVZ wird der empfangene verschlüsselte Positionsdatensatz [dp] zunächst mit dem privaten Schlüssel der zentralen Datenverarbeitungseinrichtung DVZ entschlüsselt. Anschließend werden die Positionsdaten des Positionsdatensatzes dahingehend durch den zentralen Prozessor (nicht dargestellt) der zentralen Datenverarbeitungseinrichtung DVZ dahingehend überprüft, ob sie maßgeblich für die Benutzung eines mautpflichtigen Streckenabschnittes durch das (bislang der zentralen Datenverarbeitungseinrichtung DVZ noch unbekannte) Fahrzeug sind, welches die dezentrale Datenverarbeitungseinrichtung DVD mitführt, die diese Positionsdaten übermittelt hat. Dies kann zum Beispiel durch einen Vergleich der Positionsdaten mit Ortsdaten mautpflichtiger Streckenabschnitte geschehen, die in einer Datenbank (nicht dargestellt) der zentralen Datenverarbeitungseinrichtung DVZ gespeichert sind. Schließt der zentrale Prozessor aus den Positionsdaten auf die Benutzung eines mautpflichtigen Streckenabschnittes, so bestimmt er dafür unter Berücksichtigung der Fahrzeugdaten, die vom Positionsdatensatz umfasst sind, eine entsprechende Mautgebühr (zweiter Teilschritt von Z1 in Fig. 3), die als zentrales Datenverarbeitungsergebnis ze gilt. Dieses Datenverarbeitungsergebnis ze ist datentechnisch noch mit dem Positionsdatensatz dp verknüpft (Verknüpfungszeichen zweier ineinander greifender Ringe).
Ist der Positionsdatensatz dp maßgeblich für die Benutzung mehrerer mautpflichtiger Streckenabschnitte, so können mehrere zentrale Datenverarbeitungsergebnisse ze, ze', ... erzeugt werden, die den einzelnen Mautgebühren der mautpflichtigen Streckenabschnitte entsprechen.
Darüber hinaus wird durch den zentralen Prozessor der zentralen Datenverarbeitungseinrichtung DVZ unter Anwendung einer Hash-Funktion F auf den Positionsdatensatz dp oder die Positionsdaten des Positionsdatensatzes dp ein zentraler Hashwert cf2 des Positionsdatensatzes dp oder der Positionsdaten des Positionsdatensatzes dp erzeugt (Schritt Z2 in Fig. 2). Dieser zentrale Hashwert cf2 wird mit dem Datenverarbeitungsergebnis ze verknüpft. Anschließend werden die Positionsdaten, alternativ der vollständige Positionsdatensatz dp, gelöscht (Schritt Z0 in Fig. 2). Prinzipiell genügt aber eine Lösung der Verknüpfung der Positionsdaten mit dem Datenverarbeitungsergebnis ze und dem zentralen Hashwert cf2. Es kann der Schritt Z2 auch vor dem zweiten Teilschritt von Z1 erfolgen. In jedem Fall können die Positionsdaten des Positionsdatensatzes dp oder der Positionsdatensatz dp erst dann gelöscht werden, wenn der zentrale Hashwert cf2 aus den Positionsdaten des Positionsdatensatzes dp oder aus dem Positionsdatensatz dp gebildet wurde.
Im Fahrzeuggerät 10 als dezentraler Datenverarbeitungseinrichtung DVD bildet der dezentrale Prozessor 11 unabhängig von der zentralen Datenverarbeitungseinrichtung DVZ unter Anwendung derselben Hash-Funktion F auf den Positionsdatensatz dp oder die Positionsdaten des Positionsdatensatzes dp einen dezentralen Hashwert cf1, der dem zentralen Hashwert cf2 entspricht, weil ihm dieselben Ausgangsdaten und dieselbe Hash-Funktion zugrunde liegen (Schritt D2 in Fig. 2).
Im Rahmen einer zweiten Datenübertragung 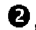 , die während einer Mobilfunk-Kommunikationsverbindung zwischen dem Fahrzeuggerät 10 (DVD) und der zentralen Datenverarbeitungseinrichtung erfolgen kann, übermittelt das Fahrzeuggerät 10, gesteuert durch den Prozessor 11, den dezentralen Hashwert cf1 zusammen mit einer Kennung idd des Fahrzeuggerätes 10 an die zentrale Datenverarbeitungseinrichtung DVZ (Schritt D3 in Fig. 2).
Die Initiierung der zweiten Datenübertragung 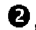 kann durch den dezentralen Prozessor 11 der dezentralen Datenverarbeitungseinrichtung DVD erfolgen, beispielsweise, indem der dezentrale Prozessor 11 prüft ob ein bestimmtes Kriterium für die Initiierung erfüllt ist. Ein solches Kriterium kann das Verstreichen einer vorgegebenen Zeitdauer (beispielsweise eine Stunde oder ein Tag) seit dem Versenden der Positionsdaten sein.
Die Initiierung der zweiten Datenübertragung 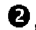 kann alternativ oder optional durch die zentrale Datenverarbeitungseinrichtung DVZ erfolgen, beispielsweise, indem die zentrale Datenverarbeitungseinrichtung DVZ eine SMS an das Fahrzeuggerät sendet mit der Aufforderung, noch nicht übertragene dezentrale Hashwerte cf1, cf1', ... zu übertragen. Da der zentralen Datenverarbeitungseinrichtung DVZ prinzipiell unbekannt ist, von welchem Fahrzeuggerät sie passende dezentrale Hashwerte cf1, cf1', ... zu erwarten hat, kann vorgesehen sein, dass sie diese SMS einmalig an alle jenen Fahrzeuggeräte 10, 10', ... sendet, von denen sie über einen bestimmten Zeitraum keinen dezentralen Hashwert cf1 mehr erhalten hat.
Die Kennung idd der dezentralen Datenverarbeitungseinrichtung DVD kann beispielsweise durch eine Seriennummer des Fahrzeuggerätes 10 gebildet sein, durch das Fahrzeugkennzeichen des Fahrzeugs, das das Fahrzeuggerät mitführt, durch die im SIM (Subscriber Identity Module) des Mobilfunk-Sendeempfängers 13 gespeicherte IMSI (International Mobile Subscriber Identity) oder durch die Mobilfunknummer MSISDN (Mobile Subscriber Integrated Services Digital Network Number) des Mobilfunk-Sendeempfängers 13. Im dem Fall, in dem die Mobilfunknummer die Kennung bildet, kann sie automatisch beim Aufbau der Kommunikationsverbindung zwischen dem Fahrzeuggerät 10 und der zentralen Datenverarbeitungseinrichtung DVZ von dem Fahrzeuggerät 10 zur zentralen Datenverarbeitungseinrichtung DVZ übertragen werden, womit sich das Fahrzeuggerät 10 gegenüber der der zentralen Datenverarbeitungseinrichtung DVZ durch seine Mobilfunknummer identifiziert. In der zentralen Datenverarbeitungseinrichtung DVZ sind zur Kennung des Fahrzeuggerätes 10 Nutzerdaten hinterlegt, mit denen ein Mautschuldner identifiziert werden kann.
Durch Vergleich eigens erzeugter zentraler Hash-Werte cf2, cf2', ..., die die zentrale Datenverarbeitungseinrichtung DVZ aus den Positionsdaten einer Vielzahl von dezentralen Datenverarbeitungseinrichtungen DVD, DVD', ... gebildet hat, mit den dezentralen Hash-Werten cf1, cf1', ..., die die zentrale Datenverarbeitungseinrichtung DVZ von der Vielzahl von dezentralen Datenverarbeitungseinrichtungen DVD, DVD', ...empfangen hat, kann die zentrale Datenverarbeitungseinrichtung DVZ eine Paarung von Datensätzen vornehmen, in denen der zentrale Hash-Wert cf2 mit dem dezentralen Hash-Wert cf1 übereinstimmt. Durch diese Paarung wird das zentrale Datenverarbeitungsergebnis (die Mautgebühr) der dezentralen Datenverarbeitungseinrichtung DVD im Wege der datentechnischen Verknüpfung der Mautgebühr mit der Kennung der dezentralen Datenverarbeitungseinrichtung DVD zugeordnet (Schritt Z3 von Fig. 2). Damit kann die Mautgebühr dem Nutzer in Rechnung gestellt werden.

In dem Fall, in dem keinen Fahrzeugdaten von dem übermittelten Positionsdatensatz dp umfasst sind, kann keine (fahrzeugabhängige) Mautgebühr aus den übermittelten Positionsdaten bestimmt werden. In diesem Fall können die Streckenabschnittskennungen von als befahren ermittelter mautpflichtiger Streckenabschnitte als zentrales Datenverarbeitungsergebnis gewertet werden. Übermittelt das Fahrzeuggerät im Rahmen der zweiten Datenübertragung 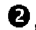 seine Fahrzeugdaten, so kann die zentrale Datenverarbeitungseinrichtung DVZ nach erfolgter Zuordnung der Streckenabschnittskennungen zum entsprechenden Fahrzeuggerät 10 die Mautgebühr in Abhängigkeit von den Streckenabschnittskennungen und den empfangenen Fahrzeugdaten berechnen.
Übermittelt das Fahrzeuggerät im Rahmen der zweiten Datenübertragung 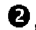 keine Fahrzeugdaten, so kann die zentrale Datenverarbeitungseinrichtung DVZ nach erfolgter Zuordnung der Streckenabschnittskennungen zum entsprechenden Fahrzeuggerät 10, die Streckenabschnittskennungen im Rahmen einer dritten Datenübertragung 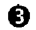 an das Fahrzeuggerät 10, dessen Identität der zentralen Datenverarbeitungseinrichtung DVZ nunmehr bekannt ist, übertragen. Das Fahrzeuggerät kann dann anhand der im Fahrzeuggerät 10 gespeicherten Fahrzeugdaten für jede Streckenabschnittskennung eine Mautgebühr bestimmen.
Wird die Mautgebühr in dieser Weise durch das Fahrzeuggerät bestimmt, oder gemäß Schritt Z4 von Fig. 2 im Zuge einer dritten Datenübertragung 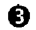 von der zentralen Datenverarbeitungseinrichtung DVZ an das Fahrzeuggerät 10 übertragen, so kann das Fahrzeuggerät die empfangene oder durch das Fahrzeuggerät 10 selbst ermittelte Mautgebühr von einem im Fahrzeuggerät gespeicherten vorausbezahlten Guthaben abziehen, welches beispielsweise auf einer sogenannten pre-paid-Karte gespeichert sein kann, auf der der dezentrale Prozessor 11 lesend und schreiben zugreifen kann.
In dieser ersten Variante des ersten Ausführungsbeispiels ist die zentrale Datenverarbeitungseinrichtung DVZ ausgebildet alle erfindungswesentlichen Verfahrensschritte des erfindungswesentlichen Verfahrens mit Ausnahme der kryptographischen Erzeugung des ersten finalen kryptographischen Datensatzes cf1 (dezentraler Hashwert) aus dem dezentralen Datensatz dp (Positionsdatensatz) durchzuführen, die einer anderen Datenverarbeitungseinrichtung - in diesem Fall der dezentralen Datenverarbeitungseinrichtung DVD (Fahrzeuggerät) - vorbehalten bleibt.

In der ersten Variante des ersten Ausführungsbeispiels, auf das sich die Fig. 3 bezieht, sind nur zwei Datenverarbeitungseinrichtungen - eine dezentrale und eine zentrale - an der Ausführung des erfindungsgemäßen Verfahrens beteiligt. Diese beiden Datenverarbeitungseinrichtungen erfüllen alle Funktion, die zur Ausführung des erfindungsgemäßen Verfahrens vonnöten sind. Es ist möglich einzelne oder alle dieser Funktionen auf andere Datenverarbeitungseinrichtungen zu übertragen, wodurch das Mautsystem eine oder mehrere zusätzliche Datenverarbeitungseinrichtungen erhält, die mit den übrigen Datenverarbeitungseinrichtung zusammenwirken.

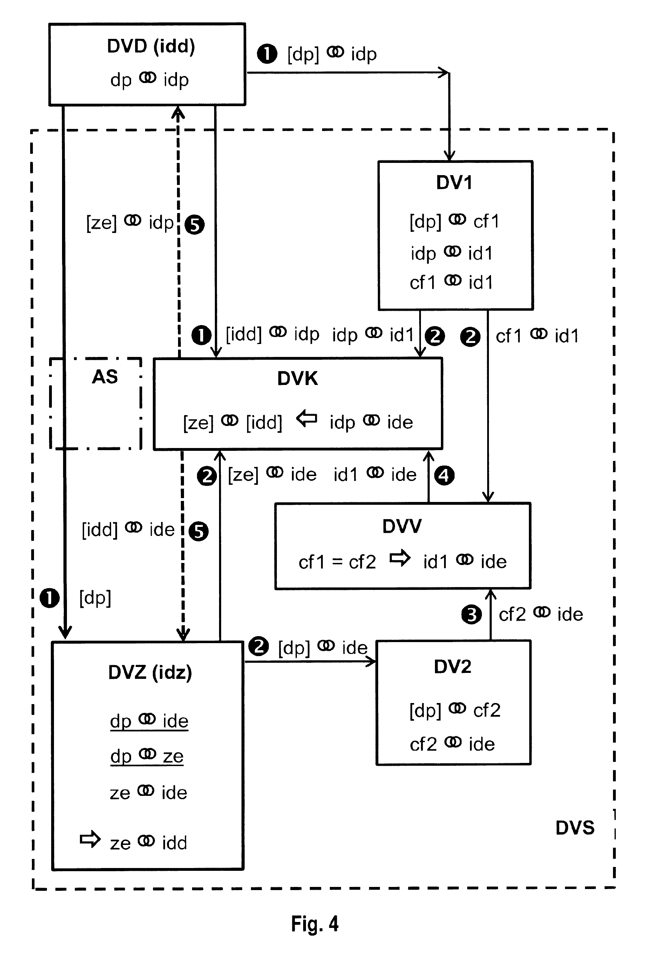

Fig. 4 veranschaulicht mit einer zweiten Variante des ersten Ausführungsbeispiels ein Mautsystem, in dem jeder wesentlichen Funktion jeweils eine auf die Ausführung dieser wesentlichen Funktion beschränkte Datenverarbeitungseinrichtung zugeordnet ist. Dabei ist die Erzeugung des dezentralen Hashwertes cf1 aus der dezentralen Datenverarbeitungseinrichtung DVD heraus auf eine erste erzeugende Datenverarbeitungseinrichtung DV1 des zentralen Datenverarbeitungssystems DVS ausgelagert, weshalb der dezentrale Hashwert cf1 der ersten Variante in dieser zweiten Variante des ersten Ausführungsbeispiels als erster Hashwert cf1 bezeichnet wird und der zentrale Hashwert cf2 der ersten Variante in dieser zweiten Variante des ersten Ausführungsbeispiels als zweiter Hashwert cf2 bezeichnet wird.
Im Folgenden wird die zweite Variante nur insofern detailliert beschrieben, als dass sie Unterschiede zur ersten Variante aufweist oder Schritte, die für das Verständnis hilfreich sind. Im Übrigen sind die Ausführungen zur ersten Variante des ersten Ausführungsbeispiels - soweit widerspruchsfrei technisch möglich - auf die zweite Variante übertragbar.
Das Mautsystem von Fig. 4 umfasst ein Fahrzeuggerät 10 als dezentrale Datenverarbeitungseinrichtung DVD und ein zentrales Datenverarbeitungssystem DVS mit einer Positionsdaten zu Mautdaten verarbeitenden zentralen Datenverarbeitungseinrichtung DVZ, einer ersten erzeugenden Datenverarbeitungseinrichtung DV1, einer zweiten erzeugenden Datenverarbeitungseinrichtung DV2, einer vergleichenden Datenverarbeitungseinrichtung DVV und einer verknüpfenden Datenverarbeitungseinrichtung DVK.
Es wird somit jedem erfindungswesentlichen Prozessschritt des erfindungsmäßen Verfahrens eine eigene Datenverarbeitungseinrichtung zugeordnet, die ausgebildet ist, den ihr zugeordneten Prozessschritt durchzuführen.
Im Fahrzeuggerät DVD wird ein Positionsdatensatz dp mit einer Kennung idp dieses Positionsdatensatzes versehen. Diese Kennung kann eine Zufallszahl sein, die der dezentrale Prozessor des Fahrzeuggerätes beispielsweise aus jeweils den letzten Stellen der Millibogensekundenwerte der Longitude und Latitude der Positionsdaten generiert.
Das Fahrzeuggerät DVD versendet in einer Gruppe von drei ersten Datenübertragungen 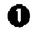 , deren zeitliche Reihenfolge untereinander prinzipiell beliebig ist, a) einen mit einem öffentlichen Schlüssel der zentralen Datenverarbeitungseinrichtung DVZ verschlüsselten Positionsdatensatz [dp] an die zentrale Datenverarbeitungseinrichtung DVZ, b) seine mit einem öffentlichen Schlüssel der zentralen Datenverarbeitungseinrichtung DVZ verschlüsselte Identität [idd] zusammen mit der Positionsdatensatzkennung idp an die verknüpfende Datenverarbeitungseinrichtung DVK und c) einen mit dem öffentlichen Schlüssel der zentralen Datenverarbeitungseinrichtung DV1 verschlüsselten Positionsdatensatz [dp], der unverschlüsselt dem Positionsdatensatz dp entspricht, der entsprechend verschlüsselt an die zentrale Datenverarbeitungseinrichtung DVZ gesendet wird oder wurde, zusammen mit der Positionsdatensatzkennung idp an die erste erzeugende Datenverarbeitungseinrichtung DV1. Die Verschlüsselung des Positionsdatensatzes mit dem öffentlichen Schlüssel der zentralen Datenverarbeitungseinrichtung DVZ (anstelle einer möglichen Verschlüsselung mit einem öffentlichen Schlüssel der ersten erzeugenden Datenverarbeitungseinrichtung DV1 hat den Vorteil, dass die erste erzeugende Datenverarbeitungseinrichtung DV1 keine Kenntnis über die Positionsdaten dp erlangt, weil ihr der private Schlüssel der zentralen Datenverarbeitungseinrichtung DVZ fehlt. Dieses Merkmal ist unabhängig von dieser Ausführungsform des zentralen Datenverarbeitungssystems dieser zweiten Variante des ersten Ausführungsbeispieles auf alle Ausführungsformen der Erfindung anwendbar, die zusätzlich zu der zentralen Datenverarbeitungseinrichtung DVZ der ersten Variante des ersten Ausführungsbeispiels eine erste erzeugende Datenverarbeitungseinrichtung DV1 umfassen, die die Aufgabe der zentralen Datenverarbeitungseinrichtung DVZ des ersten Ausführungsbeispieles übernimmt, einen ersten finalen kryptographischen Datensatz cf1 aus dem dezentralen Datensatz - in diesem Fall aus einem verschlüsselten Datensatz [dp] kryptographisch zu erzeugen.
Vorzugsweise eilen dabei die ersten Datenübertragungen 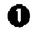 b) und 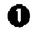 c) der ersten Datenübertragung 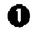 a) voraus, wobei die erste Datenübertragung 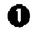 a) vorzugsweise eine im Zuge der ersten Datenübertragung 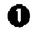 b) von der verknüpfenden Datenverarbeitungseinrichtung DVK an das Fahrzeuggerät DVD versendete digital signierte Empfangsbestätigung über den Erhalt der verschlüsselten Kennung [idd] des Fahrzeuggerätes DVD und eine im Zuge der ersten Datenübertragung 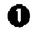 c) von der ersten erzeugenden Datenverarbeitungseinrichtung DV1 an das Fahrzeuggerät DVD versendete digital signierte Empfangsbestätigung über den Erhalt des verschlüsselten Positionsdatensatzes [dp] des Fahrzeuggerätes DVD umfasst, was von der zentralen Datenverarbeitungseinrichtung DVZ als Beleg für die ordnungsgemäße Funktion des Fahrzeuggerätes 10 gewertet werden kann und andernfalls (bei Fehlen wenigstens einer dieser Empfangsbestätigungen) eine Fehlermeldung in der zentralen Datenverarbeitungseinrichtung DVZ auslöst.
In der zentralen Datenverarbeitungseinrichtung DVZ werden durch Verarbeitung der Positionsdaten des Positionsdatensatzes Mautdaten ze (Mautgebührendaten und/ oder Streckenabschnittskennungen) erzeugt und mit einer temporären Mautdatensatzkennung ide versehen, die als Kennung des zentralen Datenverarbeitungsergebnisses ze dient. In der ersten erzeugenden Datenverarbeitungseinrichtung DV1 wird unter Anwendung einer Hash-Funktion F ein erster Hashwert cf1 des verschlüsselten Positionsdatensatzes [dp] erzeugt und mit einer temporären Hashwertkennung id1 verknüpft.
In einer Gruppe von vier zweiten Datenübertragungen 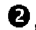 , deren zeitliche Reihenfolge untereinander prinzipiell beliebig ist, werden anschließend a) das zentrale Datenverarbeitungsergebnis ze in verschlüsselter Form [ze] zusammen mit der temporären Mautdatensatzkennung ide von der zentralen Datenverarbeitungseinrichtung DVZ an die verknüpfende Datenverarbeitungseinrichtung DVK, b) der verschlüsselte Positionsdatensatz [dp] zusammen mit der temporären Mautdatensatzkennung ide von der zentralen Datenverarbeitungseinrichtung DVZ an die zweite erzeugende Datenverarbeitungseinrichtung DV2, c) der erste Hashwert cf1 zusammen mit der Positionsdatensatzkennung idp von der ersten erzeugenden Datenverarbeitungseinrichtung DV1 an die verknüpfende Datenverarbeitungseinrichtung DVK und d) der erste Hashwert cf1 zusammen mit der Hashwertkennung id1 von der ersten erzeugenden Datenverarbeitungseinrichtung DV1 an die vergleichende Datenverarbeitungseinrichtung DVV gesendet.
Die zweite erzeugende Datenverarbeitungseinrichtung DV2 erzeugt nun aus dem von der zentralen Datenverarbeitungseinrichtung DVZ empfangenen verschlüsselten Positionsdatensatz [dp] einen zweiten Hashwert cf2, den sie anschließend in einer dritten Datenübertragung 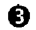 zusammen mit der Mautdatensatzkennung an die vergleichende Datenverarbeitungseinrichtung DVV sendet.
Sofort nach der Übertragung des verschlüsselten Positionsdatensatzes [dp] zusammen mit der temporären Mautdatensatzkennung ide von der zentralen Datenverarbeitungseinrichtung DVZ an die zweite erzeugende Datenverarbeitungseinrichtung DV2 löscht die zentrale Datenverarbeitungseinrichtung sowohl den verschlüsselten Positionsdatensatz [dp] als auch den entschlüsselten Positionsdatensatz.
Die vergleichende Datenverarbeitungseinrichtung DVV vergleicht alle ersten Hashwerte cf1, cf1', , die es von der ersten erzeugenden Datenverarbeitungseinrichtung DV1 empfangen hat auf Übereinstimmung mit einem der zweiten Hashwerte cf2, cf2', ..., die es von der zweiten erzeugenden Datenverarbeitungseinrichtung DV2 empfangen hat. Bei ermittelter Übereinstimmung eines ersten Hashwertes cf1 mit einem zweiten Hashwert cf2 nimmt sie die datentechnische Paarung der entsprechenden Hashwertkennung id1 des betreffenden ersten Hashwertes cf1 mit der Mautdatensatzkennung ide des betreffenden zweiten Hashwertes cf2 vor und sendet dieses Datensatzpaar von Hashwertkennung id1 und Mautdatensatzkennung ide in einer vierten Datenübertragung 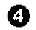 an die verknüpfende Datenverarbeitungseinrichtung DVK.
In der verknüpfenden Datenverarbeitungseinrichtung DVK liegen zu diesem Zeitpunkt sowohl erste Datensatzpaare [idd] 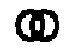 idp, [idd]' 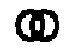 idp', ... von verschlüsselten Fahrzeuggerätkennungen [idd], [idd]', ... und Positionsdatensatzkennungen idp, idp' .. die von verschiedenen Fahrzeuggeräten DVD, DVD', ... stammen, als auch zweite Datensatzpaare [ze] 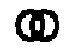 ide, [ze]' 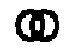 ide', ... von verschlüsselten Mautdaten [ze], [ze]', und Mautdatensatzkennungen ide, ide', ... vor, die von der zentralen Datenverarbeitungseinrichtung DVZ stammen, als auch dritte Datensatzpaare idp 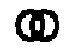 id1, idp' 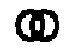 id1',... von Positionsdatensatzkennungen idp, idp' ... und Hashwertkennungen id1, id1', ..., die von der ersten erzeugenden Datenverarbeitungseinrichtung DV1 stammen, als auch vierte Datensatzpaare id1 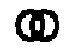 ide, id1 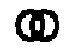 ide, ..., von Hashwertkennungen id1, id1', ... und Mautdatensatzkennungen ide, ide', ... , die von der vergleichenden Datenverarbeitungseinrichtung DVV stammen, vor.
Durch einen ersten Vergleich der ersten und dritten Datensatzpaare auf übereinstimmende Positionsdatenkennungen idp, idp', ... schafft die verknüpfende Datenverarbeitungseinrichtung DVK fünfte Datensatzpaare [idd] 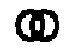 id1, [idd]' 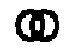 id1', ... von verschlüsselten Fahrzeuggerätkennungen [idd], [idd]', ... und Hashwertkennungen id1, id1', ....
Durch einen zweiten Vergleich der zweiten und vierten Datensatzpaare auf übereinstimmende Mautdatensatzkennungen ide, ide', ... schafft die verknüpfende Datenverarbeitungseinrichtung DVK sechste Datensatzpaare [ze] 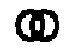 id1, [ze]' 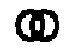 id1', ... von verschlüsselten Mautdatensätzen [ze], [ze]', ... und Hashwertkennungen id1, id1', ....
Durch einen dritten Vergleich der fünften und sechsten Datensatzpaare auf übereinstimmende Hashwertkennungen id1, id1', ... schafft die verknüpfende Datenverarbeitungseinrichtung DVK schließlich siebte Datensatzpaare [ze] 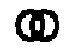 [idd], [ze]' 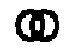 [idd]', ... von verschlüsselten Mautdatensätzen [ze], [ze]', ... und verschlüsselten Fahrzeuggerätkennungen [idd], [idd]', ..., die der erfindungsgemäßen Zuordnung des Datenverarbeitungsergebnisses ze zu der dezentralen Datenverarbeitungseinrichtung DVD entsprechen.
In einer Gruppe von einer oder zwei fünften Datenübertragungen 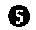 kann die verknüpfende Datenverarbeitungseinrichtung DVK die verschlüsselten Mautdaten [ze] zusammen mit der zugehörigen Positionsdatenkennung idp an das Fahrzeuggerät DVD übermitteln und/ oder die verschlüsselte Fahrzeugkennung [idd] zusammen mit de zugehörigen Mautdatensatzkennung ide an die zentrale Datenverarbeitungseinrichtung DVZ.
In der Folge können das Fahrzeuggerät die für ihn bestimmten Mautdaten ze entschlüsseln und dem entsprechenden Positionsdatensatz für die spätere Prüfung auf korrekte Mauterhebung zuordnen und/ oder die zentrale Datenverarbeitungseinrichtung DVZ die Fahrzeuggerätkennung idd entschlüsseln und den unverschlüsselten Mautdatensatz dem Fahrzeuggerät eines bestimmten Mautschuldners zuordnen.
Dabei kann die verknüpfende Datenverarbeitungseinrichtung DVK die Übertragung der verschlüsselten Fahrzeugkennung [idd] an die zentrale Datenverarbeitungseinrichtung DVZ davon abhängig machen, ob die zentrale Datenverarbeitungseinrichtung DVZ eine Anfrage der verknüpfenden Datenverarbeitungseinrichtung DVK unter Übermittlung Mautdatensatzkennung ide nach erfolgter Löschung zumindest der Positionsdaten (verschlüsselt und unverschlüsselt) des Positionsdatensatzes, aus dem die Mautdaten ze der Mautdatensatzkennung ide erzeugt wurden, positiv beantwortet. Im Falle einer ausbleibenden oder negativen Antwort der zentralen Datenverarbeitungseinrichtung DVZ würde die verknüpfende Datenverarbeitungseinrichtung DVK keine Übermittlung der Fahrzeuggerätidentität an die zentrale Datenverarbeitungseinrichtung DVZ vornehmen.

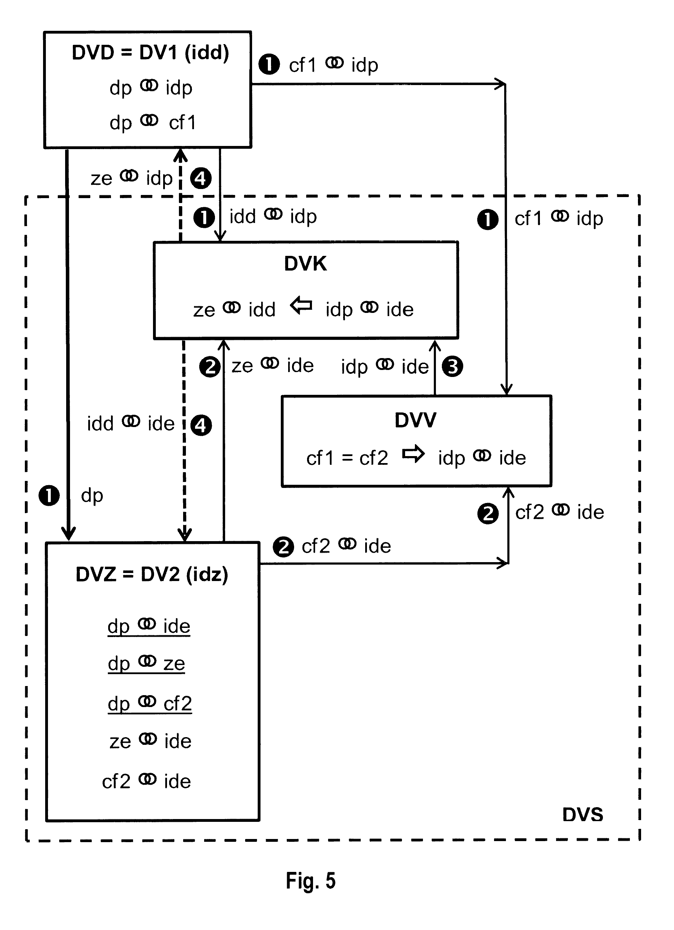

Eine dritte Variante des ersten Ausführungsbeispiels, auf die anhand von Fig. 5 Bezug genommen wird, unterscheidet sich von der zweiten Variante dadurch, dass das Fahrzeuggerät DVD wie in der ersten Variante den Prozess der ersten erzeugenden Datenverarbeitungseinrichtung DV1 durchführt und die zentrale Datenverarbeitungseinrichtung wie in der ersten Variante den Prozess der zweiten erzeugenden Datenverarbeitungseinrichtung DV2 durchführt, während im Übrigen die vergleichende Datenverarbeitungseinrichtung DVV und die verknüpfe Datenverarbeitungseinrichtung DVK erhalten bleiben. Durch diese Variante wird der Datenverkehr im zentralen Datenverarbeitungssystem DVS reduziert, wobei die Hashwertkennung id1 nicht mehr benötigt wird. Da die dezentrale Datenverarbeitungseinrichtung DVD und die zentrale Datenverarbeitungseinrichtung DVZ keine Positionsdatensätze mehr an andere Datenverarbeitungseinrichtungen übermitteln, denen nicht die Aufgabe der Erzeugung eines Datenverarbeitungsergebnisses ze obliegt, wird eine Verschlüsselung des Positionsdatensatzes zumindest für die Bildung des ersten (dezentralen) Hashwertes cf1 und des zweiten (zentralen) Hashwertes cf2 nicht benötigt.

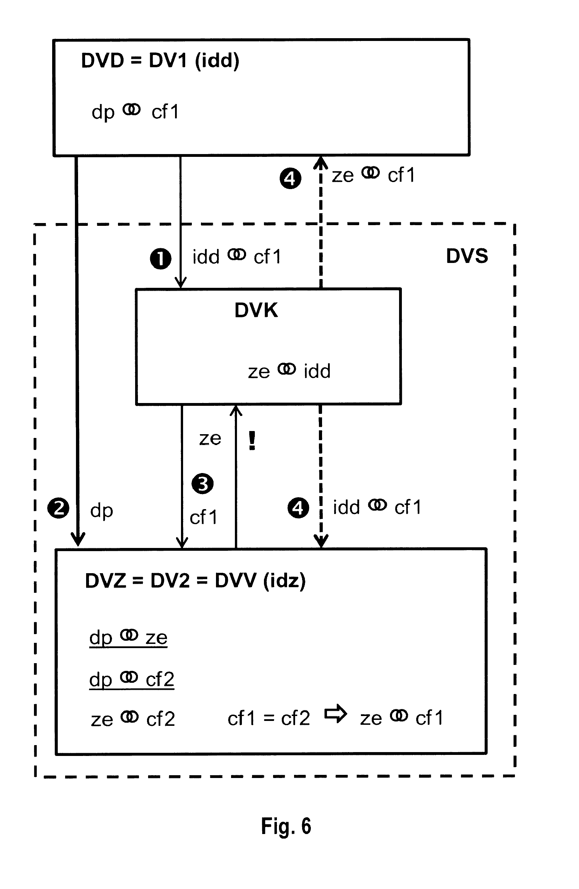

Eine vierte Variante des ersten Ausführungsbeispiels, zu deren Erläuterung Fig. 6 dient, unterscheidet sich von der dritten Variante dadurch, dass der Prozess der vergleichenden Datenverarbeitungseinrichtung DVV nunmehr von der zentralen Datenverarbeitungseinrichtung DVZ durchgeführt wird. Durch diese Variante wird der Datenverkehr im zentralen Datenverarbeitungssystem DVS weiter reduziert, was damit einhergeht, dass die Positionsdatensatzkennung idp und die Mautdatensatzkennung ide nicht mehr benötigt werden.
Als besonderes Merkmal dieser dritten Variante ist anzuführen, dass das Fahrzeuggerät DVD in einer ersten Datenübertragung 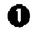 seine Kennung idd zusammen mit dem dezentralen Hashwert cf1 des Positionsdatensatzes dp an die verknüpfende Datenverarbeitungseinrichtung DVK übermittelt und erst in einer der ersten Datenübertragung 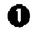 nachfolgenden zweiten Datenübertragung 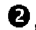 den Positionsdatensatz dp an die zentrale Datenverarbeitungseinrichtung DVZ überträgt. Den empfangenen Positionsdatensatz dp speichert die zentrale Datenverarbeitungseinrichtung DVZ in einem Positionsdatensatzspeicher (nicht dargestellt), in dem alle unverarbeiteten Positionsdatensätze dp, dp', ... gespeichert sind. Nach Ermittlung der Mautdaten ze und Erzeugung des zentralen Hashwertes cf2 aus dem Positionsdatensatz dp durch einen ersten zentralen Prozessor (nicht dargestellt) löscht die zentrale Datenverarbeitungseinrichtung DVZ zumindest die Positionsdaten des Positionsdatensatzes dp aus dem Positionsdatensatzspeicher und legt erst danach den mit der zentralen Hashwert cf2 verknüpften Mautdatensatz ze in einem Mautdatenspeicher (nicht dargestellt) ab. In einer dritten Datenübertragung 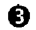 übermittelt die verknüpfende Datenverarbeitungseinrichtung DVK den dezentralen Hashwert cf1 an einen zweiten zentralen Prozessor (nicht dargestellt) der zentralen Datenverarbeitungseinrichtung DVZ. Während die Kommunikationsverbindung, in der die dritte Datenübertragung 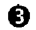 stattgefunden hat, zwischen der verknüpfenden Datenverarbeitungseinrichtung DVK und der zentralen Datenverarbeitungseinrichtung DVZ aufrechterhalten bleibt, sucht der zweite Prozessor in dem Mautdatenspeicher nach einem zentralen Hashwert cf2, der dem übermittelten dezentralen Hashwert entspricht. Wird er fündig, so übermittelt er die mit dem zentralen Hashwert cf2 verknüpften Mautdaten ze zusammen mit einer Bestätigung über die Löschung der den Mautdaten ze zu Grunde liegenden Positionsdaten des Positionsdatensatzes dp, die in Fig. 6 durch ein Ausrufungszeichen gekennzeichnet ist, an die verknüpfende Datenverarbeitungseinrichtung DVK. Wird der zweite Prozessor nicht in dem Mautdatenspeicher fündig, so liegt das daran, dass die entsprechenden Positionsdaten noch nicht von dem ersten Prozessor zu Mautdaten verarbeitet wurden. In diesem Fall sind auch die Positionsdaten noch nicht gelöscht. Der zweite Prozessor unterbricht dann von sich aus die Verbindung mit der verknüpfenden Datenverarbeitungseinrichtung DVK, die zu einem späteren Zeitpunkt wieder aufgenommen werden kann - entweder durch erneute Übermittlung des dezentralen Hashwertes cf1 von der verknüpfenden Datenverarbeitungseinrichtung DVK an die zentrale Datenverarbeitungseinrichtung DVZ oder durch Anwählen der verknüpfenden Datenverarbeitungseinrichtung DVK durch die zentrale Datenverarbeitungseinrichtung DVZ dann, wenn der zweite Prozessor den zum dezentralen Hashwert cf1 identischen zentralen Hashwert cf2 in dem Mautdatenspeicher gefunden hat. Im letzteren Fall übermittelt die zentrale Datenverarbeitungseinrichtung DVZ die Mautdaten ze zusammen mit der Löschungsbestätigung und dem dezentralen Hashwert cf1 oder zentralen Hashwert cf2, die ja identisch sind, damit die verknüpfende Datenverarbeitungseinrichtung DVK den Bezug zu einem Datenpaar herstellen kann, in dem der dezentrale Hashwert cf1 mit der Kennung idd des Fahrzeuggerätes DVD verknüpft ist.

Die verknüpfende Datenverarbeitungseinrichtung DVK wird erst dann eine Verknüpfung der empfangenen Mautdaten ze mit der Kennung idd des Fahrzeuggerätes DVD außerhalb ihres Arbeitsspeichers zumindest vorübergehend persistent abspeichern, wenn sie die Löschungsbestätigung zu dem betreffenden Hashwert cf1 oder cf2 von der zentralen Datenverarbeitungseinrichtung DVZ erhalten hat. Zur Bekanntgabe der erfolgten Verknüpfung an die Datenverarbeitungseinrichtungen, die mit einem Nutzer verknüpft sind (entweder haptisch durch Gebrauch (DVD) oder datentechnisch durch Verknüpfung mit einer Nutzerkennung (DVZ)) bieten sich wiederum zwei Alternativen an, die auch kumulativ ausgeführt werden können: Übermittlung der Mautdaten ze verknüpft mit dem betreffenden Hashwert cf1 oder cf2 an das Fahrzeuggerät DVD und/ oder Übermittlung der Kennung idd des Fahrzeuggerätes DVD verknüpft mit dem betreffenden Hashwert cf1 oder cf2 an die zentrale Datenverarbeitungseinrichtung DVZ in der Gruppe von einer oder zwei vierten Datenübertragungen 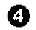 .

### ZWEITES AUSFÜHRUNGSBEISPIEL

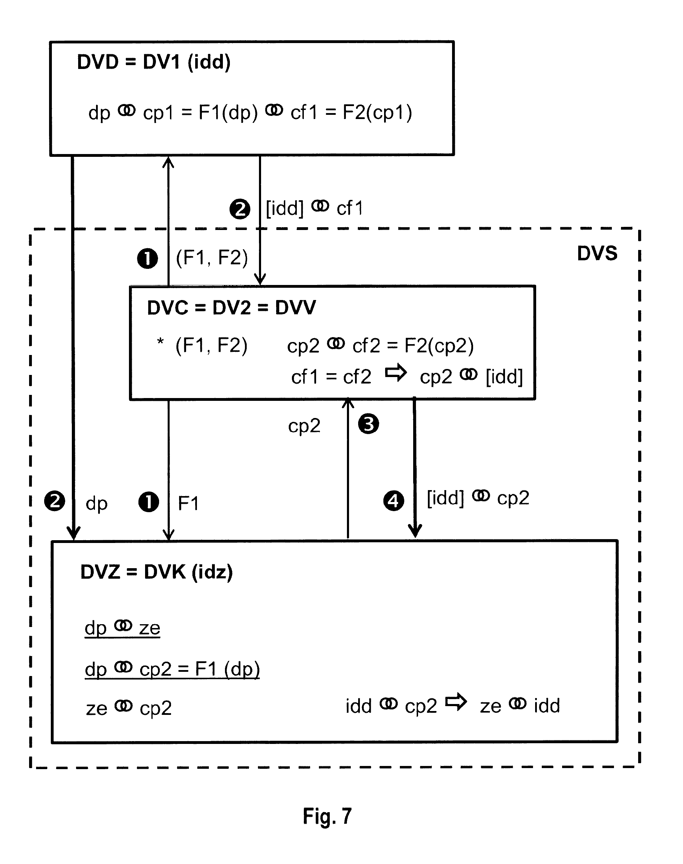

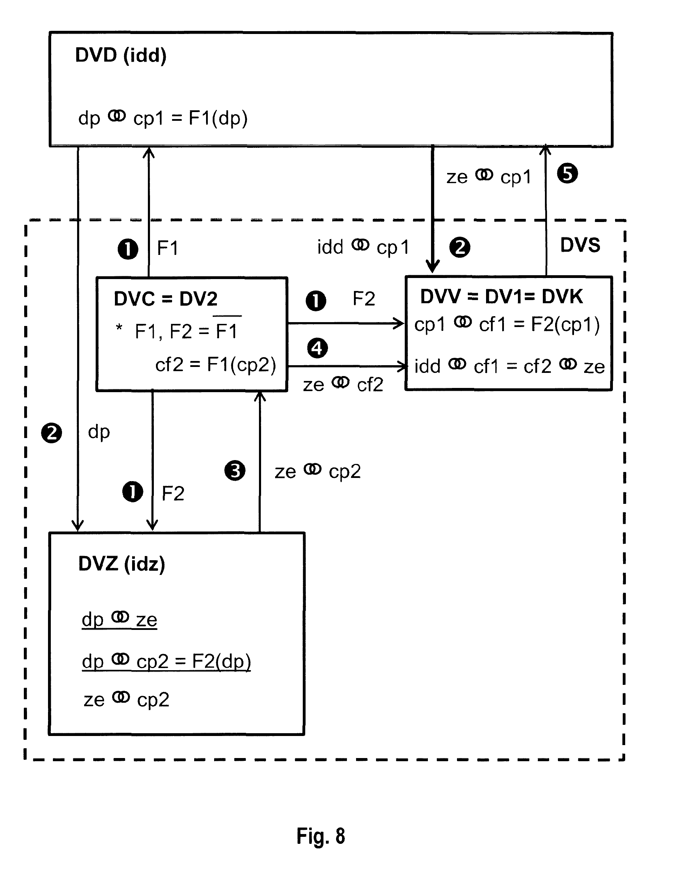

Das zweite Ausführungsbeispiel, zu dem eine erste Variante anhand von Fig. 7 und eine zweite Variante anhand von Figur 8 erläutert wird, betrifft die Verwendung eines Paares konsekutiv anzuwendender primärer und sekundärer Kryptographie-Funktionen F1 und F2 zur Erzeugung der finalen kryptographischen Datensätze cf1 und cf2. Durch die konsekutive Anwendung mehrerer Kryptographie-Funktionen kann der Datenschutz insbesondere dann verbessert werden, wenn die anzuwendenden Kryptographie-Funktionen auf verschiedenen Datenverarbeitungseinrichtungen verteilt sind, denen aus der Gruppe der anzuwendenden Kryptographie-Funktionen jeweils nur eine einzige zur Verfügung steht.
Für die Beschreibung der ersten Variante des zweiten Ausführungsbeispiels wird auf die schematische Darstellung eines Mautsystems von Fig. 7 Bezug genommen, welches eine Vielzahl von Fahrzeuggeräten DVD, DVD',... umfasst, von denen in Fig. 7 nur eines DVD schematisch dargestellt ist, sowie ein zentrales Datenverarbeitungssystem DVS mit einer kryptographischen Datenverarbeitungseinrichtung DVC, die auch als zweite erzeugende Datenverarbeitungseinrichtung DV2 und vergleichenden Datenverarbeitungseinrichtung DVV dient, und einer zentralen Datenverarbeitungseinrichtung DVZ die auch als verknüpfende Datenverarbeitungseinrichtung DVK tätig wird.
Erzeugende Datenverarbeitungseinrichtung ist jeweils die Datenverarbeitungseinrichtung, die den finalen kryptographischen Datensatz cf1 oder cf2 erzeugt, der dem Vergleich der vergleichenden Datenverarbeitungseinrichtung DVV unterworfen wird. Datenverarbeitungseinrichtungen, die nur ein Derivat cp1 oder cp2 des dezentralen Datensatzes dp erzeugen - egal ob es kryptographisch ist oder nicht -, welches einer Weiterverarbeitung zur Erzeugung des finalen kryptographischen Datensatzes cf1 oder cf2 durch eine andere Datenverarbeitungseinrichtung unterworfen wird, sind keine erzeugenden Datenverarbeitungseinrichtungen.
Die kryptographische Datenverarbeitungseinrichtung DVC erzeugt ein Paar (F1, F2) von einer primären Kryptographie-Funktion F1 und einer sekundären Kryptographie-Funktion F2. In einer Gruppe von ersten Datenübertragungen 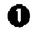 versendet die kryptographische Datenverarbeitungseinrichtung DVC zum einen das Paar (F1, F2) über das Mobilfunknetz PLMN (Public Land Mobile Network) an alle empfangsbereiten Fahrzeuggeräte DVD, DVD', ... der im Feld befindlichen Vielzahl von Fahrzeuggeräten, deren dezentraler Prozessor 11 konfiguriert ist, das von dem dezentralen Mobilfunk-Sendeempfänger 13 empfangene Paar (F1, F2) entgegenzunehmen und das Sicherheitsmodul 18 anzuweisen, dieses Paar (F1, F2) in seinem kryptographischen Datenspeicher zu speichern, und zum anderen nur die primäre Kryptographie-Funktion F1 über das landgestützte Telefonnetz PSTN (Public Switched Telephone Network) an die zentrale Datenverarbeitungseinrichtung DVZ.

Das Fahrzeuggerät DVD erzeugt durch Anwendung der ersten Kryptographie-Funktion F1 auf den Positionsdatensatz dp ein erstes primäres Derivat cp1 des Positionsdatensatzes dp und durch Anwendung der zweiten Kryptographie-Funktion F2 auf den Positionsdatensatz dp den ersten finalen kryptographischen Datensatz cf1.
Anschließend versendet das Fahrzeuggerät DVD ein einer Gruppe von zweiten Datenübertragungen 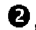 zum einen den Positionsdatensatz dp an die zentrale Datenverarbeitungseinrichtung DVZ und zum anderen seine mit dem öffentlichen Schlüssel der zentralen Datenverarbeitungseinrichtung DVZ verschlüsselte Kennung [idd] zusammen mit dem ersten finalen kryptographischen Datensatz cf1 an die kryptographische Datenverarbeitungseinrichtung DVC.
Die zentrale Datenverarbeitungseinrichtung DVZ verarbeitet die mit dem Positionsdatensatz dp empfangenen Positionsdaten zu Mautdaten ze und erzeugt ein zweites primäres Derivat cp2 des Positionsdatensatz dp durch Anwendung der primären Kryptographie-Funktion F1 auf den Positionsdatensatz dp, welches in Verknüpfung mit dem Mautdatensatz ze in der zentralen Datenverarbeitungseinrichtung DVZ gespeichert wird. Anschließend wird der Positionsdatensatz dp - zumindest aber dessen Positionsdaten - von der zentralen Datenverarbeitungseinrichtung DVZ gelöscht. Daraufhin übermittelt die zentrale Datenverarbeitungseinrichtung DVZ im Zuge einer dritten Datenübertragung 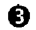 das zweite primäre Derivat cp2 an die kryptographische Datenverarbeitungseinrichtung DVC. Durch Anwendung der bei der kryptographischen Datenverarbeitungseinrichtung DVC vorliegenden zweiten Kryptographie-Funktion F2 auf das empfangene zweite primäre Derivat cp2 erzeugt die kryptographische Datenverarbeitungseinrichtung DVC den zweiten finalen kryptographischen Datensatz cf2, den sie anschießend mit allen empfangenen ersten finalen kryptographischen Datensätzen cf1, cf1', ... auf Übereinstimmung vergleicht. Die verschlüsselte Fahrzeuggerätkennung [idd], dessen ersten finaler kryptographischer Datensatz cf1 mit dem zweiten finalen kryptographischen Datensatz cf2 übereinstimmt, wird dann in einer vierten Datenübertragung 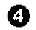 von der kryptographischen Datenverarbeitungseinrichtung DVC zusammen mit dem zweiten primären Derivat cp2 an die zentrale Datenverarbeitungseinrichtung DVZ übermittelt. Anhand des zweiten primären Derivats cp2 kann die zentrale Datenverarbeitungseinrichtung DVZ den Mautdatensatz ze ermitteln, der zur Fahrzeugkennung idd gehört, welche die zentrale Datenverarbeitungseinrichtung DVZ mittels ihres privaten Schlüssels aus der verschlüsselten Fahrzeugkennung [idd] abgeleitet hat.
Das erzeugte Paar (F1, F2) von Kryptographie-Funktionen besitzt solange Gültigkeit, bis die kryptographische Datenverarbeitungseinrichtung DVC ein neues Paar (F3, F4) von neuen Kryptographie-Funktionen erzeugt und die neuen Kryptographie-Funktionen F3 und F4 an die dezentrale Datenverarbeitungseinrichtung DVD und die neue Kryptographie-Funktion F3 an die zentrale Datenverarbeitungseinrichtung DVZ versendet. Eine Erneuerung der Kryptographie-Funktionen kann beispielsweise wöchentlich erfolgen.

In der zweiten Variante des zweiten Ausführungsbeispiels, welches anhand von Fig. 8 näher erläutert wird, sind die Kryptographie-Funktionen F1 und F2 kommutativ, das heißt: die durch die konsekutive Anwendung der Kryptographie-Funktion F1 und F2 auf einen Positionsdatensatz dp erzeugten finalen kryptographischen Datensätze cf1 und cf2 sind gleich unabhängig davon, in welcher Reihenfolge die Anwendung der Kryptographie-Funktion F1 und F2 geschieht. Es gilt folglich F1 (F2 (dp)) = F2 (F1 (dp)). Damit kann der Datenschutz weiter verbessert werden, weil erste Derivate des dezentralen Datensatzes durch verschiedene Datenverarbeitungseinrichtungen mittels unterschiedlicher Kryptographie-Funktionen erzeugt werden können, die der jeweils anderen Datenverarbeitungseinrichtung unbekannt sind.
In der vorliegenden zweite Variante des zweiten Ausführungsbeispieles sind die Daten außerdem dadurch besonders geschützt, dass vier verschiedene Datenverarbeitungseinrichtungen mit vier verschiedenen unerlässlichen Erzeugungsschritten zur Erzeugung der beiden finalen kryptographischen Datensätze cf1 und cf2 betraut sind.
Die zweiten Variante des zweiten Ausführungsbeispieles unterscheidet sich dazu von der ersten Variante des zweiten Ausführungsbeispiels darin, dass das zentrale Datenverarbeitungssystem DVS zusätzlich über eine gesonderte vergleichende Datenverarbeitungseinrichtung DVV verfügt, so dass der Verfahrensschritt des Vergleichs des ersten finalen kryptographischen Datensatzes cf1 mit dem zweiten finalen kryptographischen Datensatz cf2 nicht mehr von der kryptographischen Datenverarbeitungseinrichtung DVC durchgeführt wird. Die vergleichende Datenverarbeitungseinrichtung DVV übernimmt außerdem die Erzeugung des ersten finalen kryptographischen Datensatzes von dem Fahrzeuggerät DVD und die Zuordnung des zentralen Datenverarbeitungsergebnisses ze zu dem Fahrzeuggerät mit der Kennung idd, von dem der Positionsdatensatz dp stammt, aus denen die zentrale Datenverarbeitungseinrichtung DVZ das zentrale Datenverarbeitungsergebnis "Mautdaten" ze ableitet, von der zentralen Datenverarbeitungseinrichtung DVZ.
Zunächst erzeugt die kryptographische Datenverarbeitungseinrichtung DVC ein Paar (F1, F2) von kommutierenden Kryptographie-Funktionen F1 und F2 = F̅1̅. Im Zuge einer Gruppe von ersten Datenübertragungen 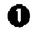 versendet die kryptographische Datenverarbeitungseinrichtung DVC die erste Kryptographie-Funktion F1 an das Fahrzeuggerät DVD und die zweite Kryptographie-Funktion F2 zum einen an die zentrale Datenverarbeitungseinrichtung DVZ und zum anderen an die vergleichende Datenverarbeitungseinrichtung DVV.
Im Zuge einer Gruppe von zweiten Datenübertragungen 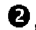 versendet das Fahrzeuggerät DVD einen Positionsdatensatz dp an die zentrale Datenverarbeitungseinrichtung DVZ und seine Kennung idd zusammen mit einem ersten primären Derivat cp1, das es zuvor durch Anwendung der ersten Kryptographie-Funktion F1 auf den Positionsdatensatz dp erzeugt hat, an die vergleichende Datenverarbeitungseinrichtung DVV.
Durch Anwendung der zweiten Kryptographie-Funktion F2 auf das empfangene erste primäre Derivat cp1 erzeugt nun die vergleichende DVV den ersten finalen kryptographischen Datensatz cf1.
Die zentrale Datenverarbeitungseinrichtung DVZ verarbeitet den empfangenen Positionsdatensatz dp und erzeugt aus den Positionsdaten und den Fahrzeugdaten, die von dem Positionsdatensatz dp umfasst sind, Mautdaten ze, die sie mit einem zweiten primären Derivat cp2 verknüpft, welches sie durch Anwendung der zweiten Kryptographie-Funktion F2 auf den Positionsdatensatz dp erzeugt hat. Anschließend löscht sie die Positionsdaten des Positionsdatensatz dp und versendet den Mautdatensatz ze zusammen mit dem zweiten primären Derivat cp2 und einer Löschungsbestätigung im Zuge einer dritten Datenübertragung 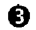 an die kryptographische Datenverarbeitungseinrichtung DVC.
Nur bei Empfang der entsprechenden Löschungsbestätigung verarbeitet die kryptographische Datenverarbeitungseinrichtung DVC das zweite primäre Derivat cp2 weiter, indem es durch Anwendung der ersten Kryptographie-Funktion F1 auf das zweite primäre Derivat cp2 den zweiten finalen kryptographischen Datensatz cf2 erzeugt und diesen zusammen mit den Mautdaten ze im Zuge einer vierten Datenübertragung 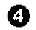 an die vergleichende DVV übersendet.
Die DVV vergleicht nun die empfangenen zweiten finalen kryptographischen Datensätze cf2, cf2',... mit den eigens erzeugten ersten finalen kryptographischen Datensätzen cf1, cf1', zur Ermittlung von miteinander zu verknüpfenden Datensatzpaaren, in denen der erste finale kryptographische Datensatz cf1 mit dem zweiten finalen kryptographischen Datensatz cf2 übereinstimmt, so dass der betreffenden Fahrzeuggerätkennung idd der betreffende Mautdatensatz ze zugeordnet werden kann. Im vorliegende Fall ist die verwendete Fahrzeuggerätkennung idd die Mobilfunknummer des Mobilfunk-Sendeempfängers 13 des Fahrzeuggerätes 10, so dass die vergleichende Datenverarbeitungseinrichtung DVV zur Vorbereitung einer fünften Datenübertragung 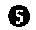 unter Wahl der Mobilfunknummer idd eine Mobilfunkverbindung zum Fahrzeuggerät 10 (DVD) initiiert und bei eingerichteter Mobilfunkverbindung zum Fahrzeuggerät DVD im Zuge der fünften Datenübertragung 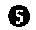 die Mautdaten ze verknüpft mit dem ersten primären Derivat cp1 an das Fahrzeuggerät DVD versendet. Dieses kann dann den Mautdatensatz ze anhand des ersten primären Derivats cp1 dem betreffenden Positionsdatensatz dp zuordnen.

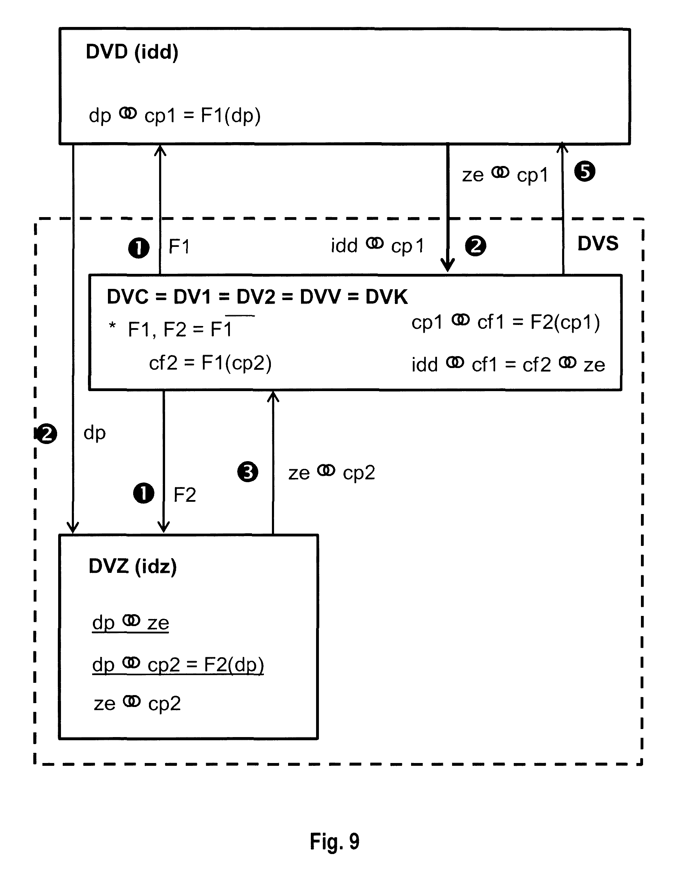

Eine in Fig. 9 dargestellte dritten Variante des zweiten Ausführungsbeispiels unterscheidet sich von der zweiten Variante dadurch, dass alle Funktionen der vergleichenden Datenverarbeitungseinrichtung DVV durch die kryptographische Datenverarbeitungseinrichtung DVC durchgeführt werden, wobei die zweite Datenübertragung 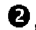 vom Fahrzeuggerät DVD dann an die kryptographische Datenverarbeitungseinrichtung DVC erfolgt und die fünfte Datenübertragung an das Fahrzeuggerät DVD von der kryptographischen Datenverarbeitungseinrichtung DVC ausgeht.

### ALTERNATIVE AUSFÜHRUNGSBEISPIELE

Die Erfindung ist nicht auf die Mautsysteme der beschriebenen Ausführungsbeispiele mit Fahrzeuggeräten oder Fahrzeugeinrichtungen als dezentrale Datenverarbeitungseinrichtungen DVD beschränkt.
Die Erfindung kann beispielsweise auch in folgenden Systemen zur Anwendung kommen:
1.) Arzneimitteldosierungssystem mit dezentraler Datenerfassungseinrichtung DVD, die Blutwerte eines Patienten als dezentrale Daten dp erfasst und diese zur zentralen Erstellung einer Dosierungsvorschrift als an ein Zentralsystem DVS übermittelt, welches seinerseits die erstellte Dosierungsvorschrift als zentrales Datenverarbeitungsergebnis ze an eine Dosierungseinrichtung des Patienten übermittelt, dessen Blutwerte dp die dezentrale Datenerfassungseinrichtung DVD erfasst hat, wobei die Dosierungseinrichtung von dezentralen Datenerfassungseinrichtung DVD umfasst sein kann.
2.) Bilanzberechnungssystem mit dezentraler Buchhaltungsdatenerfässungseinrichtung DVD, die Bilanzierungsdaten eines Unternehmens als dezentrale Daten dp erfasst und diese zur zentralen Berechnung einer Bilanz an eine Bilanzberechnungszentrale DVZ übermittelt, welche die berechnete Bilanz als zentrales Datenverarbeitungsergebnis ze an die dezentrale Buchhaltungsdatenerfassungseinrichtung oder eine Empfangsstelle des Unternehmens übermittelt, dessen dezentrale Buchhaltungsdatenerfassungseinrichtung die Bilanzierungsdaten dp erfasst hat.
3.) Bonitätsprüfungssystem mit dezentraler Zahlungsdatenerfassungseinrichtung eines Verkäufers, welche Zahlungsdaten dp als dezentrale Daten eines Kunden erfasst und an eine zentrale Bonitätsprüfungsstelle DVZ übermittelt, die die Zahlungsdaten dp zur Erlangung eines Ergebnisses hinsichtlich der Bonität des Kunden prüft und eine Bonitätsbestätigung als zentrales Datenverarbeitungsergebnis ze an die Zahlungsdatenerfassungseinrichtung DVD oder eine Anzeigeeinrichtung des Verkäufers übermittelt, dessen dezentrale Zahlungsdatenerfassungseinrichtung DVD die Zahlungsdaten dp des Kunden erfasst hat.

### Bezugszeichenliste

- 10: Fahrzeuggerät
- 11: dezentraler Prozessor
- 12: Positionsbestimmungseinrichtung
- 12 a: GNSS-Empfänger
- 12 b: GNSS-Empfangsantenne
- 13: Mobilfunk-Sendeempfänger (fahrzeugseitig)
- 13 b: Mobilfunk-Antenne (fahrzeugseitig)
- 13 c: Basisstation eines Mobilfunknetzes
- 14: Uhr
- 15: Anzeigeeinrichtung
- 16: Daten-Lese-Speicher
- 17: Daten-Schreib-Lese-Speicher
- 18: Sicherheitsmodul/ kryptographischer Datenspeicher
- 19: wiederaufladbare Batterie
- 19 a: Stromversorgungsanschluss

- DVD: dezentrale Datenverarbeitungseinrichtung
- DVZ: zentrale Datenverarbeitungseinrichtung
- DVS: zentrales Datenverarbeitungssystem
- DVK: verknüpfende Datenverarbeitungseinrichtung
- DVV: vergleichende Datenverarbeitungseinrichtung
- DV1: erste erzeugende Datenverarbeitungseinrichtung
- DV2: zweite erzeugende Datenverarbeitungseinrichtung
- DVC: kryptographische Datenverarbeitungseinrichtung
- AS: Anonymisierungsserver

- dp: dezentraler Datensatz
- [dp]: dezentraler Datensatz, verschlüsselt
- cf1: erster finaler kryptographischer Datensatz, erster/ dezentraler Hashwert
- cf2: zweiter finaler kryptographischer Datensatz, zweiter/ zentraler Hashwert
- ze: zentrales Datenverarbeitungsergebnis
- [ze]: zentrales Datenverarbeitungsergebnis, verschlüsselt
- cp1: erstes Derivat des dezentralen Datensatzes (dp)
- cp2: zweites Derivat des dezentralen Datensatzes (dp)
- F: erste Kryptographie-Funktion
- F': zweite Kryptographie-Funktion
- F1: primäre Kryptographie-Funktion
- F2: sekundäre Kryptographie-Funktion

- idd: Kennung der dezentralen Datenverarbeitungseinrichtung DVD
- [idd]: Kennung der dezentralen Datenverarbeitungseinrichtung DVD, verschlüsselt
- idp: Kennung des dezentralen Datensatzes dp
- idz: Kennung der zentralen Datenverarbeitungseinrichtung
- ide: Kennung des zentralen Datenverarbeitungsergebnisses
- id1: Kennung des ersten finalen kryptographischen Datensatzes cf1

## Patentansprüche

1. Verfahren zur Zuordnung eines von einer zentralen Datenverarbeitungseinrichtung (DVZ) aus einem dezentralen Datensatz (dp) einer dezentralen Datenverarbeitungseinrichtung (DVD) erzeugten zentralen Datenverarbeitungsergebnisses (ze) zu der dezentralen Datenverarbeitungseinrichtung (DVD), von der der dezentrale Datensatz (dp) stammt,
umfassend
die Übertragung des dezentralen Datensatzes (dp) von der dezentralen Datenverarbeitungseinrichtung (DVD) an die zentrale Datenverarbeitungseinrichtung (DVZ)
und
die Bestimmung wenigstens eines zentralen Datenverarbeitungsergebnisses (ze) aus dem dezentralen Datensatz (dp) durch die zentrale Datenverarbeitungseinrichtung (DVZ),
**dadurch gekennzeichnet, dass**
in wenigstens einem ersten Datensatzerzeugungsprozess (D2) ein erster finaler kryptographischer Datensatz (cf1) aus dem dezentralen Datensatz (dp) kryptographisch erzeugt wird,
in wenigstens einem zweiten Datensatzerzeugungsprozess (Z2) ein zweiter finaler kryptographischer Datensatz (cf2) aus dem dezentralen Datensatz (dp) kryptographisch erzeugt wird,
im Zuge eines datentechnischen Vergleichsprozesses der erste finale kryptographischer Datensatz (cf1) mit dem zweiten finalen kryptographischen Datensatz (cf2) auf Übereinstimmung verglichen wird,
und
bei Übereinstimmung des ersten finalen kryptographischen Datensatzes (cf1) mit dem zweiten finalen kryptographischen Datensatz (cf2) im Zuge eines datentechnischen Zuordnungsprozesses das zentralen Datenverarbeitungsergebnis (ze) der dezentralen Datenverarbeitungseinrichtung (DVD) zugeordnet wird.

2. Verfahren nach einem der vorhergehenden Ansprüche **dadurch gekennzeichnet, dass**
der erste finale kryptographische Datensatz (cf1) vor der Durchführung des besagten datentechnischen Zuordnungsprozesses in einem dezentralen Datenspeicher der dezentralen Datenverarbeitungseinrichtung (DVD) zumindest zeitweise gespeichert wird und/ oder mit einer zumindest zeitweise gültigen Kennung (idd) der dezentralen Datenverarbeitungseinrichtung (DVD) verknüpft wird und
der zweite finale kryptographische Datensatz (cf2) vor der Durchführung des besagten datentechnischen Zuordnungsprozesses zumindest zeitweise in einem zentralen Datenspeicher der zentralen Datenverarbeitungseinrichtung (DVZ) gespeichert wird und/ oder mit dem zentralen Datenverarbeitungsergebnis (ze) verknüpft wird,
und
im besagten datentechnischen Zuordnungsprozess die Zuordnung des zentralen Datenverarbeitungsergebnisses (ze) zu der dezentralen Datenverarbeitungseinrichtung (DVD) durch die Übertragung des zentralen Datenverarbeitungsergebnisses (ze) auf die dezentrale Datenverarbeitungseinrichtung (DVD) und/ oder durch die datentechnische Verknüpfung der Kennung (idd) der dezentralen Datenverarbeitungseinrichtung (DVD) mit dem zentralen Datenverarbeitungsergebnis (ze) erfolgt.

3. Verfahren nach einem der vorhergehenden Ansprüche **dadurch gekennzeichnet, dass**
der erste finale kryptographische Datensatz (cf1) unter Anwendung wenigstens einer ersten Kryptographie-Funktion (F) auf den dezentralen Datensatz (dp) oder auf ein erstes Derivat (cp1) des dezentralen Datensatzes (dp) erzeugt wird und
der zweite finale kryptographische Datensatz (cf2) unter Anwendung wenigstens einer zweiten Kryptographie-Funktion (F') auf den dezentralen Datensatz (dp) oder auf ein zweites Derivat (cp2) des dezentralen Datensatzes (dp) erzeugt wird, wobei
die wenigstens eine erste Kryptographie-Funktion (F) eine erste Hash-Funktion ist, mit der ein erster Hashwert des dezentralen Datensatzes (dp) oder des ersten Derivates (cp1) des dezentralen Datensatzes (dp) erzeugt wird,
und
die wenigstens eine zweite Kryptographie-Funktion (F') eine zweite Hash-Funktion ist, mit der ein zweiter Hashwert des dezentralen Datensatzes (dp) oder des zweiten Derivates (cp2) des dezentralen Datensatzes (dp) erzeugt wird.

4. Verfahren nach einem der vorhergehenden Ansprüche **dadurch gekennzeichnet, dass**
der besagte datentechnische Zuordnungsprozess von einer verknüpfenden Datenverarbeitungseinrichtung (DVZ, DVK) durchgeführt wird, auf der zumindest zum Zeitpunkt der Durchführung der Zuordnung des zentralen Datenverarbeitungsergebnisses (ze) zu der dezentralen. Datenverarbeitungseinrichtung (DVD) keine Verknüpfung des zentralen Datenverarbeitungsergebnisses (ze) mit dem dezentralen Datensatz (dp) auf der verknüpfenden Datenverarbeitungseinrichtung (DVZ, DVK) vorliegt
und/ oder
der besagte datentechnische Vergleichsprozess von einer vergleichenden Datenverarbeitungseinrichtung (DVZ, DVV) durchgeführt wird, auf der zumindest zum Zeitpunkt der Durchführung des Vergleichs des ersten finalen kryptographischen Datensatzes mit dem zweiten finalen kryptographischen Datensatz keine Verknüpfung des zentralen Datenverarbeitungsergebnisses (ze) mit dem dezentralen Datensatz (dp) in der vergleichenden Datenverarbeitungseinrichtung (DVZ, DVV) vorliegt.

5. Verfahren nach einem der vorhergehenden Ansprüche **dadurch gekennzeichnet, dass**
die Erzeugung des wenigstens einen zweiten finalen kryptographischen Datensatzes (cf2) im zweiten Datensatzerzeugungsprozess (Z2) die konsekutive Anwendung wenigstens einer primären Kryptographie-Funktion (F1) und einer sekundären Kryptographie-Funktion (F2) auf den dezentralen Datensatzes (dp) oder auf ein initiales Derivat des dezentralen Datensatzes (dp) umfasst,
wobei
ein primäres Derivat (cp2) in Form eines kryptographischen Zwischenergebnisses durch Anwendung wenigstens der primären Kryptographie-Funktion (F1) auf den dezentralen Datensatz (dp) oder auf ein initiales Derivat des dezentralen Datensatzes (dp) erzeugt wird,
und
die zentrale Datenverarbeitungseinrichtung (DVZ) oder ein die zentrale Datenverarbeitungseinrichtung (DVZ) umfassendes zentrales Datenverarbeitungssystem (DVS) den empfangenen dezentralen Datensatz (dp) aus einer bestehenden datentechnischen Verknüpfung mit dem primären Derivat (cp2) und/ oder dem zentralen Datenverarbeitungsergebnis (ze) löst,
(a) nachdem die zentrale Datenverarbeitungseinrichtung (DVZ) oder das zentrale Datenverarbeitungssystem (DVS) das primäre Derivat (cp2) des empfangenen dezentralen Datensatzes (dp) erzeugt oder erhalten hat und
(b) bevor die zentrale Datenverarbeitungseinrichtung (DVZ) oder das zentrale Datenverarbeitungssystem (DVS) den zweiten finalen kryptographischen Datensatz (cf2) erhalten oder unter Anwendung der sekundären Kryptographie-Funktion (F2) auf das primäre Derivat (cp2) erzeugt hat.

6. Verfahren nach einem der vorhergehenden Ansprüche **dadurch gekennzeichnet, dass**
der erste finale kryptographische Datensatz (cf1) unter Anwendung wenigstens einer ersten Kryptographie-Funktion (F) auf den dezentralen Datensatz (dp) erzeugt wird und
der zweite finale kryptographische Datensatz (cf2) unter Anwendung wenigstens der ersten Kryptographie-Funktion (F) auf den dezentralen Datensatz (dp) erzeugt wird,
wobei
eine kryptographische Datenverarbeitungseinrichtung (DVC) wenigstens die erste Kryptographie-Funktion (F) erstellt und
wenigstens die erste Kryptographie-Funktion (F) an.wenigstens eine erste erzeugende Datenverarbeitungseinrichtung (DV1) zur Durchführung des ersten Datensatzerzeugungsprozesses (D2) übermittelt.

7. Verfahren nach einem der vorhergehenden Ansprüche **dadurch gekennzeichnet, dass**
der erste finale kryptographische Datensatz (cf1) unter Anwendung wenigstens eines Satzes von mehreren konsekutiv auf den dezentralen Datensatz (dp) anzuwendenden Kryptographie-Funktionen (F1, F2) erzeugt wird und
der zweite finale kryptographische Datensatz (cf2) unter Anwendung des wenigstens einen Satzes von mehreren konsekutiv auf den dezentralen Datensatz (dp) anzuwendenden Kryptographie-Funktionen (F1, F2) erzeugt wird,
wobei
eine kryptographische Datenverarbeitungseinrichtung (DVC) den wenigstens einen Satz von mehreren konsekutiv anzuwendenden Kryptographie-Funktionen (F1, F2) mit einer primären Kryptographie-Funktion (F1) und wenigstens einer, ergänzend zur primären Kryptographie-Funktion (F1) anzuwendenden, sekundären Kryptographie-Funktion (F2) erstellt und von diesem Satz von mehreren konsekutiv anzuwendenden Kryptographie-Funktionen (F1, F2),
an die zentrale Datenverarbeitungseinrichtung (DVZ) die primäre Kryptographie-Funktion (F1) übermittelt und die sekundäre Kryptographie-Funktion (F2) einer ersten anderen Datenverarbeitungseinrichtung (DV2, DVV, DVC) bereitstellt, die nicht die zentrale Datenverarbeitungseinrichtung ist,
die zentrale Datenverarbeitungseinrichtung (DVZ) unter Anwendung der primären Kryptographie-Funktion (F1) auf den dezentralen Datensatz (dp) oder ein initiales Derivat des dezentralen Datensatzes (dp) ein primäres Derivat (cp2) in Form eines kryptographischen Zwischenergebnisses erzeugt und dieses primäre Derivat (cp2) an die andere Datenverarbeitungseinrichtung (DV2, DVV, DVC) übermittelt und
die erste andere Datenverarbeitungseinrichtung (DV2, DVV, DVC) im zweiten Datensatzerzeugungsprozess (Z2) unter Anwendung der sekundären Kryptographie-Funktion (F2) auf das primäre Derivat (cp2) den zweiten finalen kryptographische Datensatz (cf2) erzeugt.

8. Verfahren nach einem der vorhergehenden Ansprüche **dadurch gekennzeichnet, dass**
die Übertragung des dezentralen Datensatzes (dp) von der dezentralen Datenverarbeitungseinrichtung (DVD) im Zuge einer ersten Kommunikationsphase an die zentrale Datenverarbeitungseinrichtung (DVZ) über einen Anonymisierungsserver erfolgt, der eine allfällig von der dezentralen Datenverarbeitungseinrichtung (DVD) zusammen mit dem dezentralen Datensatz (dp) empfangene Kennung (idd) der dezentralen Datenverarbeitungseinrichtung (DVD) von dem dezentralen Datensatz (dp) löst und den dezentralen Datensatz (dp) ohne die Kennung (idd) der dezentralen Datenverarbeitungseinrichtung (DVD) an die zentrale Datenverarbeitungseinrichtung (DVZ) oder an eine andere Datenverarbeitungseinrichtung übermittelt, die zur Weiterleitung des dezentralen Datensatzes (dp) an die zentrale Datenverarbeitungseinrichtung (DVZ) bestimmt ist.

9. Verfahren nach einem der vorhergehenden Ansprüche **dadurch gekennzeichnet, dass**
(D1) die dezentrale Datenverarbeitungseinrichtung (DVD) den wenigstens einen dezentralen Datensatz (dp) im Zuge einer ersten Kommunikationsphase an ein, die zentrale Datenverarbeitungseinrichtung (DVZ) umfassendes oder bildendes, zentrales Datenverarbeitungssystem (DVS) sendet und
(Z1) das zentrale Datenverarbeitungssystem (DVS) den dezentralen Datensatz (dp) im Zuge der ersten Kommunikationsphase ohne eine Kennung (idd) der dezentralen Datenverarbeitungseinrichtung (DVD) empfängt und die zentrale Datenverarbeitungseinrichtung (DVZ) durch Verarbeitung des dezentralen Datensatzes (dp) ein zentrales Datenverarbeitungsergebnis (ze) des dezentralen Datensatzes (dp) bestimmt,
wobei
(D2) die dezentrale Datenverarbeitungseinrichtung (DVD) aus dem dezentralen Datensatz (dp) unter Anwendung wenigstens einer Kryptographie-Funktion auf den dezentralen Datensatz (dp) den wenigstens einen ersten finalen kryptographischen Datensatz (cf1) erzeugt und den ersten finalen kryptographischen Datensatz (cf1) im Zuge einer zweiten Kommunikationsphase an das zentrale Datenverarbeitungssystem sendet, und
(Z2) das zentrale Datenverarbeitungssystem (DVS) aus dem im Zuge der ersten Kommunikationsphase empfangenen dezentralen Datensatz (dp) unter Anwendung der wenigstens einen Kryptographie-Funktion auf den empfangenen dezentralen Datensatz (dp) den wenigstens einen zweiten finalen kryptographischen Datensatz (cf2) erzeugt,
und
wobei das zentrale Datenverarbeitungsergebnis (ze) der dezentralen Datenverarbeitungseinrichtung (DVD) zugeordnet wird,
indem
(D3) eine Kennung (idd) der dezentralen Datenverarbeitungseinrichtung (DVD) im Zuge der zweiten Kommunikationsphase von der dezentralen Datenverarbeitungseinrichtung (DVD) an das zentrale Datenverarbeitungssystem (DVS) übertragen wird, und
(Z3) durch das zentrale Datenverarbeitungssystem (DVS) diese Kennung (idd) mit dem zentralen Datenverarbeitungsergebnis (ze) desjenigen dezentralen Datensatzes (dp) datentechnisch verknüpft wird, dessen erster finaler kryptographischer Datensatz (cf1) dem zweiten finalen kryptographischen Datensatz (cf2) entspricht,
und/ oder indem
(Z4) das zentrale Datenverarbeitungsergebnis (ze) im Zuge der zweiten Kommunikationsphase oder einer weiteren Kommunikationsphase von dem zentralen Datenverarbeitungssystem (DVS) an diejenige dezentrale Datenverarbeitungseinrichtung (DVD) übertragen wird, dessen erster finaler kryptographischer Datensatz (cf1) dem zweiten finalen kryptographischen Datensatz (cf2) entspricht.

10. Verfahren nach Anspruch 9 **dadurch gekennzeichnet, dass**
die zentrale Datenverarbeitungseinrichtung (DVZ) im zweiten Datensatzerzeugungsprozess (Z2) den zweiten finalen kryptographischen Datensatz (cf2) erzeugt
und
das zentrale Datenverarbeitungssystem (DVS) eine verknüpfende Datenverarbeitungseinrichtung (DVK) umfasst, die
(a) im Zuge der zweiten Kommunikationsphase den ersten finalen kryptographischen Datensatz (cf1) verknüpft mit einer Kennung (idd) der dezentralen Datenverarbeitungseinrichtung (DVD) empfängt,
(b) im Zuge einer dritten Kommunikationsphase, die ersten Kommunikationsphase zeitlich nachgeordnet ist, das zentrale Datenverarbeitungsergebnis (ze) von der zentralen Datenverarbeitungseinrichtung (DVZ) empfängt, und
(c) eine Zuordnung des zentralen Datenverarbeitungsergebnisses (ze) zu der Kennung (idd) der dezentralen Datenverarbeitungseinrichtung (DVD) über Verwendung vermittels des mit der Kennung (idd) verknüpften ersten finalen kryptographischen Datensatz (cf1) durchführt.

11. Verfahren nach einem der vorhergehenden Ansprüche **dadurch gekennzeichnet, dass**
die dezentrale Datenverarbeitungseinrichtung (DVD) eine mobile dezentrale Datenverarbeitungseinrichtung ist, die von einem Nutzer entlang eines Weges mitgeführt wird
und Wegemessdaten empfängt und/ oder bestimmt, die wenigstens eine Nutzerposition umfassen, und
der dezentrale Datensatz (dp) zumindest eine Nutzerposition umfasst,
und das zentrale Datenverarbeitungsergebnis (ze) wenigstens einen Wert umfasst, der von wenigstens einer Nutzerposition des dezentralen Datensatzes abhängt.

12. Verfahren nach Anspruch 11 **dadurch gekennzeichnet, dass**
die zentrale Datenverarbeitungseinrichtung (DVZ) unter Verwendung von wenigstens einer Nutzerposition des dezentralen Datensatzes (dp) Daten des dezentralen Datensatzes auf die Erfüllung wenigstens einer Bedingung überprüft, die maßgeblich ist für die Erkennung wenigstens eines vorgegebenen geographischen Objekts, und bei Erfüllung aller Bedingungen von Daten des dezentralen Datensatzes bezüglich eines bestimmten vorgegebenen geographischen Objekts wenigstens das bestimmte vorgegebene geographische Objekt und/ oder wenigstens einen aus diesem bestimmten vorgegebenen geographischen Objekt abgeleiteten Wert als zentrales Datenverarbeitungsergebnis (ze) des dezentralen Datensatzes (dp) registriert.

13. Dezentrale Datenverarbeitungseinrichtung (DVD), die ausgebildet ist,
(D1) wenigstens einen dezentralen Datensatz (dp) zu erzeugen und im Zuge einer ersten Kommunikationsphase an ein zentrales Datenverarbeitungssystem (DVZ) zu senden,
**dadurch gekennzeichnet, dass**
die dezentrale Datenverarbeitungseinrichtung (DVD) ferner ausgebildet ist,
(D2) aus dem dezentralen Datensatz (dp) durch Anwendung wenigstens einer Kryptographie-Funktion (F1, F2) auf wenigstens einen bestimmten Teil oder ein Derivat (cp1) des dezentralen Datensatzes (dp) wenigstens einen dezentralen kryptographischen Datensatz (cf1) des dezentralen Datensatzes (dp) zu erzeugen und den dezentralen kryptographischen Datensatz (cf1) im Zuge einer zweiten Kommunikationsphase an das zentrale Datenverarbeitungssystem (DVS) zu senden,
sowie
(D3) eine Kennung (idd) der dezentralen Datenverarbeitungseinrichtung (DVD) im Zuge der zweiten Kommunikationsphase an das zentrale Datenverarbeitungssystem zu übertragen
und/oder
(Z4) ein aus dem dezentralen Datensatz (dp) abgeleitetes Datenverarbeitungsergebnis (ze) im Zuge der zweiten oder einer dritten Kommunikationsphase von dem zentralen Datenverarbeitungssystem (DVS) zu empfangen.

14. Zentrales Datenverarbeitungssystem (DVS), das ausgebildet ist,
(Z1) wenigstens einen dezentralen Datensatz (dp) im Zuge einer ersten Kommunikationsphase ohne eine Kennung (idd) der dezentralen Datenverarbeitungseinrichtung (DVD) von einer dezentralen Datenverarbeitungseinrichtung (DVD) zu empfangen und durch Verarbeitung des dezentralen Datensatzes (dp) ein zentrales Datenverarbeitungsergebnis (ze) des dezentralen Datensatzes (dp) zu bestimmen,
**dadurch gekennzeichnet, dass**
das zentrale Datenverarbeitungssystem (DVS) ferner ausgebildet ist,
(Z2) aus dem im Zuge der ersten Kommunikationsphase empfangenen dezentralen Datensatz (dp) durch Anwendung wenigstens einer Kryptographie-Funktion (F1, F2) auf wenigstens einen bestimmten Teil oder ein Derivat (cp2) des empfangenen dezentralen Datensatzes (dp) einen zentralen kryptographischen Datensatz (cf2) des empfangenen dezentralen Datensatzes (dp) zu erzeugen,
(D2) einen dezentralen kryptographischen Datensatz (cf1) von der dezentralen Datenverarbeitungseinrichtung (DVD) im Zuge einer zweiten Kommunikationsphase zu empfangen,
sowie
(D3) eine Kennung (idd) der dezentralen Datenverarbeitungseinrichtung (DVD) im Zuge der zweiten Kommunikationsphase von der dezentralen Datenverarbeitungseinrichtung (DVD) zu empfangen und
(Z3) diese Kennung mit dem zentralen Datenverarbeitungsergebnis (ze) des dezentralen Datensatzes (dp) datentechnisch zu verknüpfen, dessen dezentraler kryptographischer Datensatz (cf1) dem zentralen kryptographischen Datensatz (cf2) entspricht,
und/oder
(Z4) das zentrale Datenverarbeitungsergebnis (ze) im Zuge der zweiten Kommunikationsphase an die dezentrale Datenverarbeitungseinrichtung (DVD) zu übertragen, dessen dezentraler kryptographischer Datensatz (cf1) dem zentralen kryptographischen Datensatz (cf2) entspricht.

15. Kryptographische Datenverarbeitungseinrichtung (DVC), die ausgebildet ist,
eine Kryptographie-Funktion oder mehrere Kryptographie-Funktionen (F1, F2) bereitzustellen, wenigstens eine bereitgestellte Kryptographie-Funktionen (F1, F2) an eine Vielzahl von dezentralen Datenverarbeitungseinrichtungen (DVD) zu versenden und
wenigstens eine bereitgestellte Kryptographie-Funktionen (F1, F2) an wenigstens eine zentrale Datenverarbeitungseinrichtung (DVZ) zu versenden,
einen ersten kryptographischen Datensatz (cp1, cf1) eines dezentralen Datensatzes (dp) von wenigstens einer dezentralen Datenverarbeitungseinrichtung (DVD) zu empfangen,
einen zweiten kryptographischen Datensatz (cp2, cf2) des dezentralen Datensatzes (dp) zusammen mit einem zentralen Datenverarbeitungsergebnis (ze) des dezentralen Datensatzes (dp) von der zentralen Datenverarbeitungseinrichtung (DVZ) zu empfangen,
einen durch den ersten kryptographischen Datensatz (cf1) bereitgestellten oder aus dem ersten kryptographischen Datensatz (cp1) erzeugten ersten finalen kryptographischen Datensatz (cf1) mit einem durch dem zweiten finalen kryptographischen Datensatz (cf2) bereitgestellten oder aus dem zweiten kryptographischen Datensatz (cp2) erzeugten zweiten finalen kryptographischen Datensatz (cf2) auf Übereinstimmung zu vergleichen,
und
bei Übereinstimmung des ersten finalen kryptographischen Datensatzes (cf1) mit dem zweiten finalen kryptographischen Datensatz (cf2) das zentrale Datenverarbeitungsergebnis (ze) der dezentralen Datenverarbeitungseinrichtung (DVD) zuzuordnen.
